(19) Europäisches Patentamt / European Patent Office / Office européen des brevets

(11) **EP 3 483 516 A1**

(12) **EUROPEAN PATENT APPLICATION**
published in accordance with Art. 153(4) EPC

(43) Date of publication:
**15.05.2019 Bulletin 2019/20**

(51) Int Cl.:
*F24F 11/00* (2018.01)

(21) Application number: **16908162.7**

(22) Date of filing: **07.07.2016**

(86) International application number:
**PCT/JP2016/070059**

(87) International publication number:
**WO 2018/008118 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation Chiyoda-ku Tokyo 100-8310 (JP)**

(72) Inventors:
• **NAKAJIMA Osamu**
**Tokyo 100-8310 (JP)**
• **YAMAMOTO Takaya**
**Tokyo 100-8310 (JP)**
• **NAKAI Takahiro**
**Tokyo 100-8310 (JP)**
• **UENO Yohei**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **AIR-CONDITIONING CONTROL APPARATUS, AIR-CONDITIOING CONTROL METHOD, AIR-CONDITIONING SYSTEM, AND HOUSE WITH AIR CONDITIONER**

(57) To improve comfort of air-conditioning and reduce energy required for air-conditioning. An air conditioner performs air-conditioning of a room to be air-conditioned. A presence-in-room status of at least one room including a room to be air-conditioned is acquired. The presence-in-room status of at least one room includes a presence-in-room status of the room to be air-conditioned. A time history of a presence-in-room status of at least one room is stored. From the time history of the presence-in-room status of at least one room, a conditional presence-in-room rate is calculated indicating a probability that a person is present in a room to be air-conditioned in response to a change in the presence-in-room status of at least one room. When the presence-in-room status of the room to be air-conditioned is in an absent state, control is performed on the air conditioner such that an air-conditioning heat quantity decreases as the conditional presence-in-room rate decreases.

FIG. 4

EP 3 483 516 A1

**Description**

<u>Technical Field</u>

The present invention relates to an air-conditioning control apparatus, an air-conditioning control method, an air-conditioning system, and a house with air conditioner.

<u>Background Art</u>

In order to reduce energy required for air-conditioning, control of an air conditioner is performed for increasing a target room temperature during heating and lowering the target room temperature during cooling when a person is present, and for lowering the target room temperature during heating and increasing the target room temperature during cooling when no person is present.

For example, in a technique described in Patent Document 1, a set temperature of a fan heater main body is set to 18 °C or 20 °C when presence of a human body is detected (paragraphs 0021 and 0022), while the set temperature of the fan heater main body is set to 15 °C or off when presence of a human body is not detected (paragraph 0023).

In a technique described in Patent Document 2, an air-conditioning device is controlled based on a remote-controller set value when it is determined that a room is in a state of being in use, and control for absence is performed when it is determined that the room is in a state of being not in use (paragraph 0032). In the control for absence, waiting is performed in a state where an air-conditioning state can be returned to the remote-controller set value in a short time when a predicted presence-in-room rate level is high, a room temperature is supported to ensure that it does not take several tens of minutes to return to a state of the remote-controller set value when the predicted presence-in-room rate level is moderate, and a stop is made when the predicted presence-in-room rate level is low (paragraph [0032]). The predicted presence-in-room rate is output on the basis of a standard pattern obtained from a response of a sensor that detects the presence and absence of a person (paragraph 0027).

<u>Prior Art Documents</u>

<u>Patent Documents</u>

  Patent Document 1: Japanese Patent Application Laid-Open JP 5-223266 A (1993)
  Patent Document 2: Japanese Patent Publication JP 3 119 082 B2

<u>Summary</u>

<u>Problem to be Solved by the Invention</u>

According to the technique described in Japanese Patent Publication JP 3 119 082 B2, it is also possible to reduce energy required for air-conditioning while improving comfort of air-conditioning. However, if the room suddenly becomes in the state of being in use in the state where the predicted presence-in-room rate level is low and it takes time to return the air-conditioning state to the remote-controller set value, comfort of air-conditioning cannot be improved in many cases. In addition, if the room suddenly becomes in a state of being not in use in the state where the predicted presence-in-room rate level is high and it takes not so much time to return the air-conditioning state to the remote-controller set value, energy required for air-conditioning cannot be reduced in many cases.

The present invention has been made to solve this problem. A purpose of the present invention is to improve comfort of air-conditioning and to reduce energy required for air-conditioning.

<u>Means to Solve the Problem</u>

The present invention is directed to an air-conditioning control apparatus.

An air conditioner performs air-conditioning of a room to be air-conditioned. A presence-in-room status of at least one room including the room to be air-conditioned is acquired. The presence-in-room status of at least one room includes a presence-in-room status of the room to be air-conditioned. A time history of a presence-in-room status of at least one room is stored. From the time history of the presence-in-room status of at least one room, a conditional presence-in-room rate is calculated indicating a probability that a person is present in the room to be air-conditioned in response to a change in the presence-in-room status of at least one room. When the presence-in-room status of the room to be air-conditioned is in an absent state, control is performed on the air conditioner such that an air-conditioning heat quantity decreases as the conditional presence-in-room rate decreases.

The present invention is also directed to an air-conditioning control method, an air-conditioning system, and a house with air conditioner.

Effects of the Invention

According to the present invention, a change in an in-room state of each room affecting an in-room state of the room to be air-conditioned is reflected in the air-conditioning heat quantity, and the air-conditioning heat quantity approaches one that is suitable for an in-room state of the room to be air-conditioned. This improves comfort of air-conditioning and reduces energy required for air-conditioning.

Objects, features, aspects, and advantages of the present invention will become more apparent from the following detailed description and the accompanying drawings.

Brief Description of Drawings

Fig. 1     is a schematic view showing a first floor portion of a house in which an air-conditioning system of a first embodiment is to be installed.

Fig. 2     is a schematic view showing a house with air conditioner of the first embodiment.

Fig. 3     is a block diagram showing the house with air conditioner of the first embodiment.

Fig. 4     is a block diagram showing an air-conditioning system of the first embodiment.

Fig. 5     is a flowchart showing an operation of a controller before control of an air conditioner is performed in the first embodiment.

Fig. 6     is a flowchart showing an operation of the controller when control of the air conditioner is performed in the first embodiment.

Fig. 7     is a view for explaining random variables in the first embodiment and a second embodiment.

Fig. 8     is a time chart showing a time history of a presence-in-room status of a living room when a person has a habit of staying in the living room at a specific time.

Fig. 9     is a graph showing a standard pattern of a presence-in-room rate of the living room when a person has a habit of staying in the living room at a specific time in the first embodiment.

Fig. 10    is a time chart showing a time history of a presence-in-room status of the living room when a person does not have a habit of staying in the living room at a specific time.

Fig. 11    is a graph showing a standard pattern of a presence-in-room rate of the living room when a person does not have a habit of staying in the living room at a specific time in the first embodiment.

Fig. 12    is a time chart showing a time history of presence-in-room statuses of the living room and a kitchen when a person does not have a habit of staying in the living room at a specific time.

Fig. 13    is a flowchart showing an operation of the controller when a control presence-in-room rate is calculated in the first embodiment.

Fig. 14    is a graph showing a relationship between a control presence-in-room rate and a target room temperature during heating in the first embodiment.

Fig. 15    is a graph showing a relationship between a control presence-in-room rate and a target room temperature during heating in the first embodiment.

Fig. 16    is a time chart showing an operation example of the air conditioner in the first embodiment.

Fig. 17    is a schematic view showing a house with air conditioner of the second embodiment.

Fig. 18    is a time chart showing a time history of a presence-in-room status of the living room.

Fig. 19    is a block diagram showing an air-conditioning system of the second embodiment.

Fig. 20    is a flowchart showing an operation of a controller when a control presence-in-room rate is calculated in the second embodiment.

Fig. 21    is a time chart showing an operation example of an air conditioner in the second embodiment.

Fig. 22    is a block diagram showing an air-conditioning system including a controller of a seventh embodiment.

Fig. 23    is a flowchart showing an operation of the controller when a control presence-in-room rate is calculated in the seventh embodiment.

Fig. 24    is a flowchart showing an operation of the controller when a control presence-in-room rate is calculated in the seventh embodiment.

Fig. 25    is a graph showing a distribution of a time of returning home on each day of a week.

Fig. 26    is a graph showing a standard pattern of presence-in-room rates of a kitchen and a living room on each of Monday and the days other than Monday in an eighth embodiment.

Description of Embodiments

1 First Embodiment

1.1 Introduction

A first embodiment relates to a house with air conditioner, an air-conditioning system, and a controller.

1.2 House

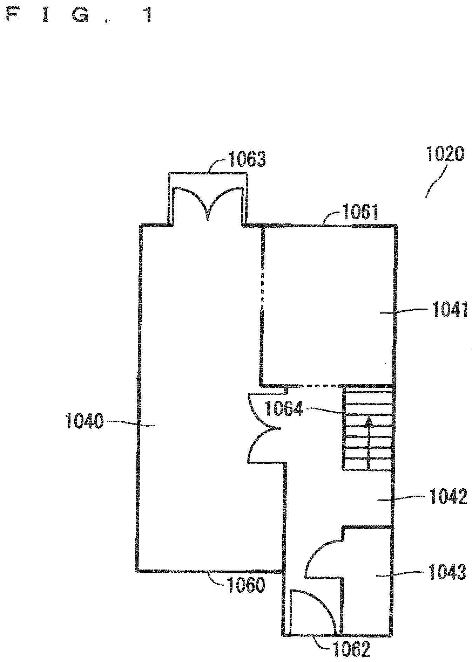

Fig. 1 is a schematic view showing a first floor portion of a house in which an air-conditioning system of the first embodiment is to be installed.

A house 1020 shown in Fig. 1 has a living room 1040, a kitchen 1041, a hall 1042, and a toilet 1043. Each of the living room 1040, the kitchen 1041, the hall 1042, and the toilet 1043 may be replaced by another type of room. The house 1020 may have rooms other than the living room 1040, the kitchen 1041, the hall 1042, and the toilet 1043. For example, the house 1020 may have a dining room. In some cases, the house 1020 does not have part or all of the living room 1040, the kitchen 1041, the hall 1042, and the toilet 1043. The house 1020 is configured such that a person can freely move from one room of the house 1020 to another room of the house 1020.

In the living room 1040, the kitchen 1041, and the hall 1042, windows 1060, 1061, and 1062 are formed, respectively. In the living room 1040, an entrance 1063 is formed. In the hall 1042, a stairway 1064 heading toward a second floor is installed.

1.3 House with air conditioner and air-conditioning system

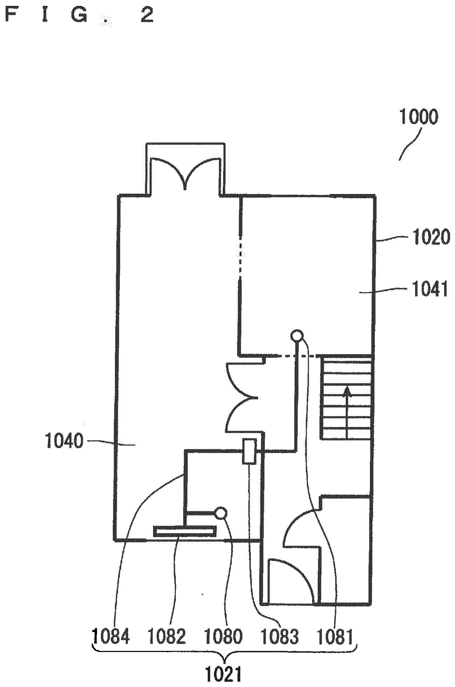

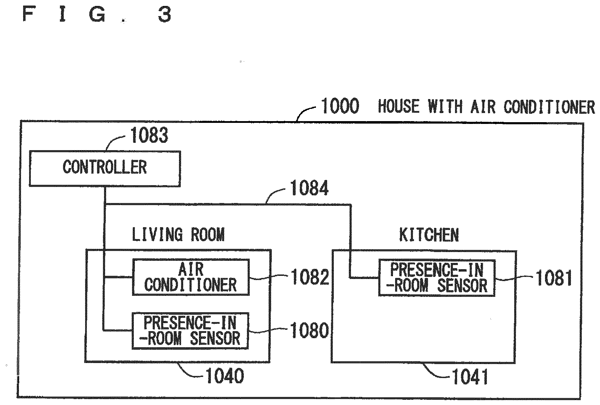

Fig. 2 is a schematic view showing the house with air conditioner of the first embodiment. Fig. 3 is a block diagram showing the house with air conditioner of the first embodiment.

A house with air conditioner 1000 shown in Fig. 2 includes the house 1020 and an air-conditioning system 1021. The house with air conditioner 1000 may include components other than these components. As shown in FIGS. 2 and 3, the air-conditioning system 1021 includes a presence-in-room sensor 1080, a presence-in-room sensor 1081, an air conditioner 1082, a controller 1083, and a communication path 1084. The air-conditioning system 1021 may include components other than these components.

The presence-in-room sensor 1080 is installed in the living room 1040 and detects a presence-in-room status of the living room 1040. The presence-in-room sensor 1081 is installed in the kitchen 1041 and detects a presence-in-room status of the kitchen 1041. As a result, the presence-in-room sensors 1080 and 1081 serve as detection mechanisms that detect presence-in-room statuses of the living room 1040 and the kitchen 1041. The presence-in-room status of the living room 1040 indicates whether or not a person is present in the living room 1040, and is in an in-room state or an absent state. The presence-in-room status of the kitchen 1041 indicates whether or not a person is present in the kitchen 1041, and is in an in-room state or an absent state. Presence-in-room statuses of three or more rooms including the living room 1040 and the kitchen 1041 may be detected.

The air conditioner 1082 is installed in the living room 1040 and performs air-conditioning of the living room 1040 such that a room temperature of the living room 1040 approaches a target room temperature of the living room 1040.

In the house with air conditioner 1000, the air conditioner 1082 performs air-conditioning of the living room 1040 that is a target room for air-conditioning, the presence-in-room sensor 1080 detects the presence-in-room status of the living room 1040 that is the target room for air-conditioning, and the presence-in-room sensor 1081 detects the presence-in-room status of the kitchen 1041 that is a second room different from the living room 1040 that is a first room. The target room for air-conditioning, that is, the first room may be a room other than the living room 1040. The second room may be a room other than the kitchen 1041.

The controller 1083 is communicably coupled to each of the presence-in-room sensors 1080 and 1081 via the communication path 1084, receives a detection signal indicating the presence-in-room status of the living room 1040 from the presence-in-room sensor 1080 via the communication path 1084, and receives a detection signal indicating the presence-in-room status of the kitchen 1041 from the presence-in-room sensor 1081 via the communication path 1084.

The controller 1083 is communicably connected to the air conditioner 1082 via the communication path 1084, and transmits a control signal indicating a target room temperature of the living room 1040 to the air conditioner 1082 via the communication path 1084. Thus, the controller 1083 functions as an air-conditioning control apparatus that controls the air conditioner 1082.

1.4 Controller

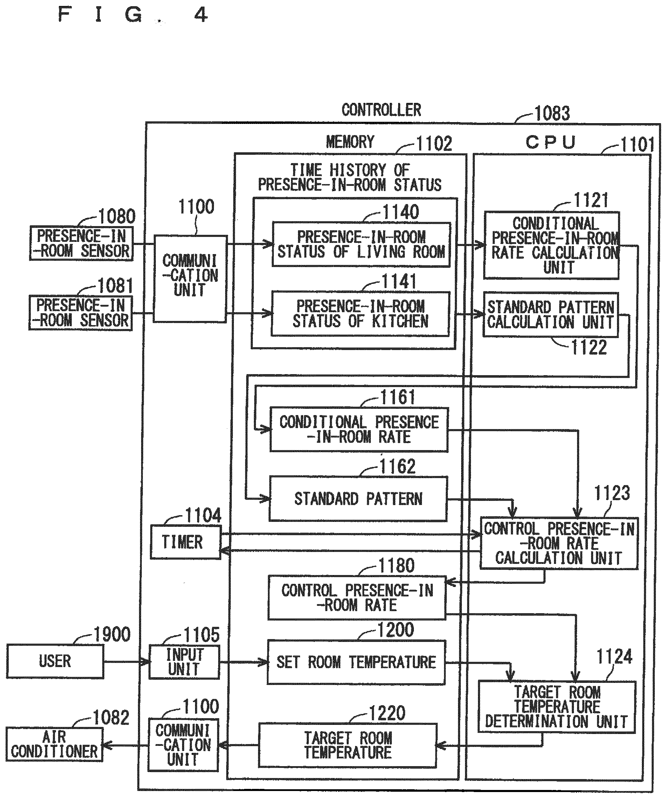

Fig. 4 is a block diagram showing an air-conditioning system of the first embodiment.

As shown in Fig. 4, the controller 1083 includes a communication unit 1100, a central processing unit (CPU) 1101, a memory 1102, a timer 1104, and an input unit 1105. The controller 1083 may include components other than these components. By executing a control program for defining a control algorithm, the CPU 1101 functions as a conditional presence-in-room rate calculation unit 1121, a standard pattern calculation unit 1122, a control presence-in-room rate calculation unit 1123, and a target room temperature determination unit 1124. An arithmetic unit constituted of the CPU 1101 may be replaced with another type of arithmetic unit.

For example, the arithmetic unit constituted of the CPU 1101 may be replaced with an arithmetic unit constituted of an electronic circuit that does not execute a program, and the conditional presence-in-room rate calculation unit 1121, the standard pattern calculation unit 1122, the control presence-in-room rate calculation unit 1123, and the target room temperature determination unit 1124 may be implemented by an electronic circuit that does not execute a program.

The communication unit 1100 is connected to each of the presence-in-room sensors 1080 and 1081 via the communication path 1084, receives a detection signal indicating a presence-in-room status of the living room 1040 from the presence-in-room sensor 1080, and receives a detection signal indicating a presence-in-room status of the kitchen 1041 from the presence-in-room sensor 1081. Thus, the communication unit 1100 functions as an acquisition unit that acquires presence-in-room statuses of the living room 1040 and the kitchen 1041 from the presence-in-room sensors 1080 and 1081. The communication unit 1100 causes the memory 1102 to store the obtained presence-in-room statuses of the living room 1040 and the kitchen 1041.

Thus, the memory 1102 functions as a storage unit that stores a time history 1140 of a presence-in-room status of the living room 1040 and a time history 1141 of a presence-in-room status of the kitchen 1041. A storage device constituted of the memory 1102 may be replaced with another type of storage device. For example, the storage device constituted of the memory 1102 may be replaced with a storage device constituted of a hard disk drive.

The conditional presence-in-room rate calculation unit 1121 reads the time history 1140 of the presence-in-room status of the living room 1040 and the time history 1141 of the presence-in-room status of the kitchen 1041 from the memory 1102, calculates a conditional presence-in-room rate 1161 of the living room 1040 from the read time history 1140 of the presence-in-room status of the living room 1040 and from the read time history 1141 of the presence-in-room status of the kitchen 1041, and causes the memory 1102 to store the calculated conditional presence-in-room rate 1161 of the living room 1040.

The conditional presence-in-room rate 1161 of the living room 1040 indicates a conditional probability, which is a probability that a person is present in the living room 1040 in response to a change from an in-room state to an absent state in the presence-in-room status of the kitchen 1041, and is a time series of the conditional probability.

The standard pattern calculation unit 1122 reads the time history 1140 of the presence-in-room status of the living room 1040 from the memory 1102, calculates a standard pattern 1162 of the presence-in-room rate of the living room 1040 from the read time history 1140 of the presence-in-room status of the living room 1040, and causes the memory 1102 to store the calculated standard pattern 1162 of the presence-in-room rate of the living room 1040. The standard pattern 1162 of the presence-in-room rate of the living room 1040 indicates a standard probability that a person is present in the living room 1040, and is a time series of this probability.

The timer 1104 measures a time period.

The control presence-in-room rate calculation unit 1123 causes the timer 1104 to reset time measurement, causes the timer 1104 to start time measurement, and obtains a time period being measured from the timer 1104. The control presence-in-room rate calculation unit 1123 reads the conditional presence-in-room rate 1161 of the living room 1040 and the standard pattern 1162 of the presence-in-room rate of the living room 1040 from the memory 1102, obtains the time period being measured from the timer 1104, calculates a control presence-in-room rate 1180 to be used for controlling the air conditioner 1082, and causes the memory 1102 to store the calculated control presence-in-room rate 1180.

The input unit 1105 accepts an input of a set room temperature 1200 of the living room 1040 by a user 1900 and causes the memory 1102 to store the input set room temperature 1200 of the living room 1040.

The target room temperature determination unit 1124 reads the control presence-in-room rate 1180 and the set room temperature 1200 of the living room 1040 from the memory 1102, determines a target room temperature 1220 of the living room 1040, and causes the memory 1102 to store the determined target room temperature 1220 of the living room 1040. The target room temperature 1220 of the living room 1040 during heating in which the air conditioner 1082 performs heating decreases as the control presence-in-room rate 1180 decreases.

The target room temperature 1220 of the living room 1040 during cooling in which the air conditioner 1082 performs cooling increases as the control presence-in-room rate 1180 decreases. Therefore, an air-conditioning heat quantity of the air conditioner 1082 decreases as the control presence-in-room rate 1180 decreases. The air-conditioning heat quantity of the air conditioner 1082 is an amount of heat supplied to the living room 1040 by the air conditioner 1082 during heating, and is an amount of heat recovered from the living room 1040 by the air conditioner 1082 during cooling.

Since the air conditioner 1082 performs air-conditioning of the living room 1040 in accordance with the target room temperature 1220 of the living room 1040 determined by the target room temperature determination unit 1124, the target room temperature determination unit 1124 functions as a control unit that controls the air conditioner 1082 such that the air-conditioning heat quantity decreases as the control presence-in-room rate 1180 decreases.

The communication unit 1100 reads the target room temperature 1220 of the living room 1040 from the memory 1102, and transmits a control signal indicating the read target room temperature 1220 of the living room 1040 to the air conditioner 1082 via the communication path 1084.

1.5 Operation of controller before control of air conditioner is performed

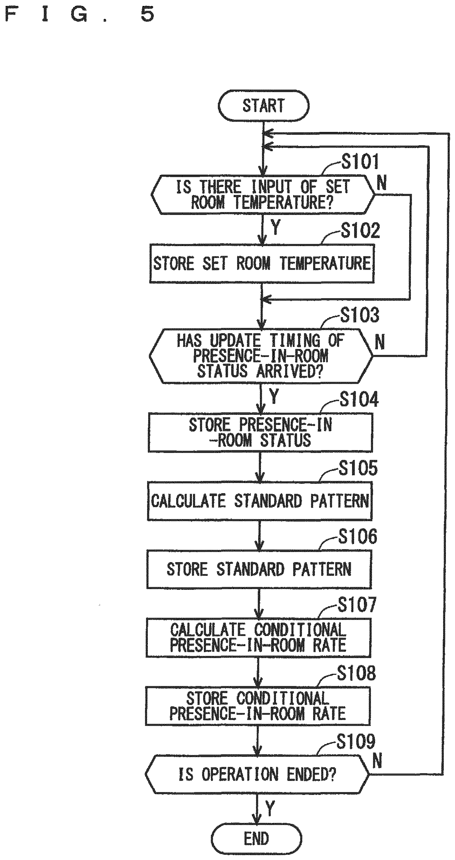

Fig. 5 is a flowchart showing an operation of the controller before control of an air conditioner is performed in the first embodiment.

In step S101 shown in Fig. 5, the input unit 1105 determines whether or not there is an input of the set room temperature 1200 of the living room 1040. When there is the input, the process proceeds to step S102. When there is no input, the process proceeds to step S103.

In step S102, the input unit 1105 causes the memory 1102 to store the input set room temperature 1200 of the living room 1040.

When the set room temperature 1200 of the living room 1040 is newly input in steps S101 and S102, the set room temperature 1200 of the living room 1040 that has been newly input and newly stored in the memory 1102 is used for controlling the air conditioner 1082, and when the set room temperature 1200 of the living room 1040 is not newly input, the set room temperature 1200 of the living room 1040 that has been input and stored in the memory 1102 in the past is used for controlling the air conditioner 1082.

In step S103 following step S102, the communication unit 1100 determines whether or not an update timing of presence-in-room statuses of the living room 1040 and the kitchen 1041, which are to be periodically updated, has arrived. When the update timing has arrived, the process proceeds to step S104. When the update timing has not arrived, the process proceeds to step S101 again. As a result, the input unit 1105 repeatedly accepts an input of the set room temperature 1200 of the living room 1040 until the update timing arrives.

In step S104 following step S103, the communication unit 1100 receives presence-in-room statuses of the living room 1040 and the kitchen 1041, and causes the memory 1102 to store the received presence-in-room statuses of the living room 1040 and the kitchen 1041. At this time, presence-in-room statuses of the living room 1040 and the kitchen 1041 stored in the memory 1102 in the past are kept stored in the memory 1102 without being erased from the memory 1102 until a certain time period elapses. As a result, in the memory 1102, the time history 1140 of the presence-in-room status of the living room 1040 and the time history 1141 of the presence-in-room status of the kitchen 1041 are stored.

In step S105 following step S104, the standard pattern calculation unit 1122 calculates the standard pattern 1162 of a presence-in-room rate of the living room 1040, and in step S106 following step S105, the standard pattern calculation unit 1122 causes the memory 1102 to store the calculated standard pattern 1162 of the presence-in-room rate of the living room 1040.

In step S107 following step S106, the conditional presence-in-room rate calculation unit 1121 calculates the conditional presence-in-room rate 1161 of the living room 1040, and in step S108 following step S107, the conditional presence-in-room rate calculation unit 1121 causes the memory 1102 to store the calculated conditional presence-in-room rate 1161 of the living room 1040.

In step S109 following step S108, it is determined whether or not the operation of the air-conditioning system 1021 has been ended. When the operation has been ended, the process is ended. When the operation has not been ended, the process proceeds to step S101 again. As a result, while the air-conditioning system 1021 is operating, the set room temperature 1200 of the living room 1040 to be used for controlling the air conditioner 1082 is updated each time the set room temperature 1200 of the living room 1040 is input, and the presence-in-room status of the living room 1040, the presence-in-room status of the kitchen 1041, the conditional presence-in-room rate 1161 of the living room 1040, and the standard pattern 1162 of the presence-in-room rate of the living room 1040 are updated each time the update timing of the presence-in-room statuses of the living room 1040 and the kitchen 1041 arrives.

The conditional presence-in-room rate 1161 of the living room 1040 and the standard pattern 1162 of the presence-in-room rate of the living room 1040 are not necessarily updated each time the update timing of the presence-in-room statuses of the living room 1040 and the kitchen 1041 arrives. Therefore, the conditional presence-in-room rate 1161 of the living room 1040 and the standard pattern 1162 of the presence-in-room rate of the living room 1040 are allowed to be updated, for example, only once a day or once a month.

1.6 Operation of controller when control of air conditioner is performed

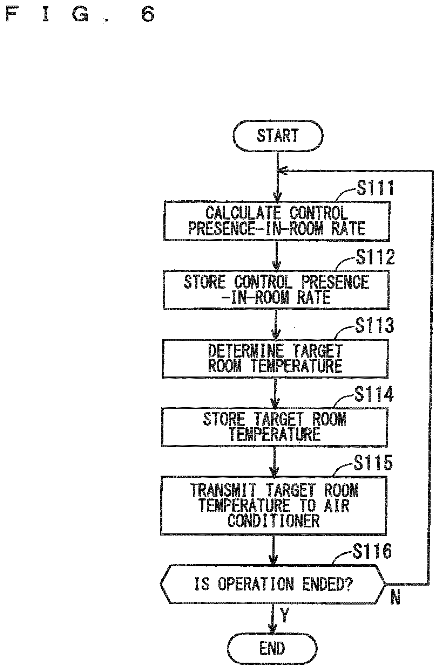

Fig. 6 is a flowchart showing an operation of the controller when control of the air conditioner is performed in the first embodiment.

In step S111 shown in Fig. 6, the control presence-in-room rate calculation unit 1123 calculates the control presence-in-room rate 1180, and in step S112 following step S111, the control presence-in-room rate calculation unit 1123 causes the memory 1102 to store the calculated control presence-in-room rate 1180.

In step S113 following step S112, the target room temperature determination unit 1124 determines the target room temperature 1220 of the living room 1040, and in step S114 following step S113, the target room temperature determination unit 1124 causes the memory 1102 to store the determined target room temperature 1220 of the living room 1040.

In step S115 following step S114, the communication unit 1100 transmits the determined target room temperature 1220 of the living room 1040 to the air conditioner 1082.

In step S116 following step S115, it is determined whether or not the operation of the air conditioner 1082 has been ended. When the operation has been ended, the process is ended. When the operation has not been ended, the process proceeds to step S111 again. As a result, while the air conditioner 1082 is operating, the control presence-in-room rate 1180 and the target room temperature 1220 of the living room 1040 are repeatedly updated.

1.7 Advantages of using conditional presence-in-room rate of living room

1.7.1 Random variables

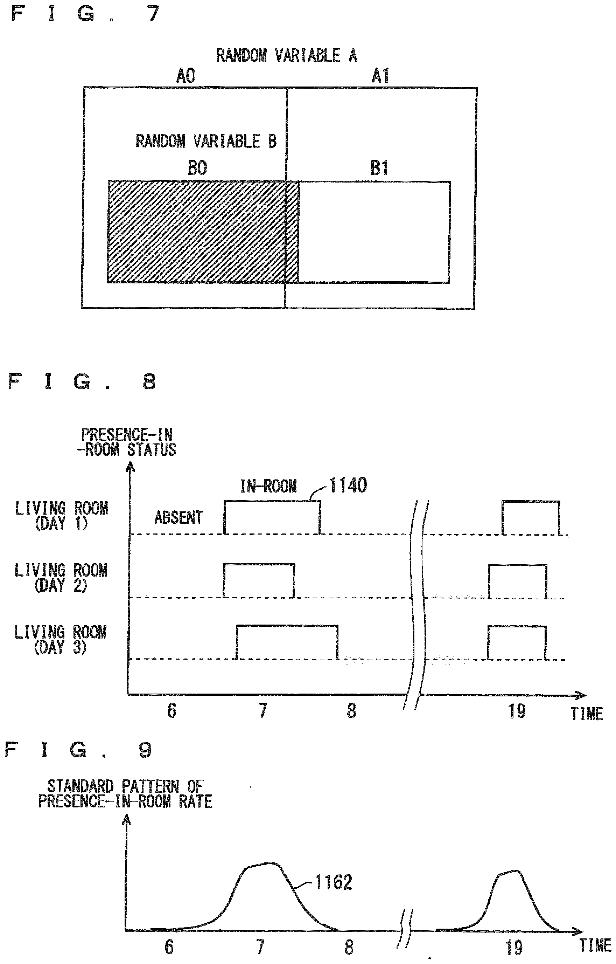

Fig. 7 is a view for explaining random variables in the first embodiment.

A random variable A shown in Fig. 7 expresses a presence-in-room status of the living room 1040. A random variable B shown in Fig. 7 expresses an occurrence state of an event that a presence-in-room status of the kitchen 1041 has changed from an absent state to an in-room state. The random variable A takes an in-room state A0 or an absent state A1. The random variable B takes a state B0 in which the event has occurred or a state B1 in which the event has not occurred. When the random variable B takes the state B1 in which the event has not occurred, a state in which the presence-in-room status of the kitchen 1041 is in an in-room state is continuing or a state in which the presence-in-room status of the kitchen 1041 is in an absent state is continuing.

When the target room for air-conditioning is changed to a room other than the living room 1040, what is expressed by the random variable A is changed to a presence-in-room status of the room other than the living room 1040. What is expressed by the random variable B may be changed to other than the occurrence state of the event that the presence-in-room status of the kitchen 1041 has changed from an absent state to an in-room state. For example, what is expressed by the random variable B may be changed to an occurrence state of an event that a time period during which a presence-in-room status of the kitchen 1041 or the room other than the kitchen 1041 continues to be in an absent state is a set time period or more.

1.7.2 Presence-in-room rate of living room

A probability P that a person is present in the living room 1040 is obtained by dividing the number of counts that a presence-in-room status of the living room 1040 has been in an in-room state in the past by the total number of counts of the number of counts that the presence-in-room status of the living room 1040 has been in an in-room state in the past and the number of counts that the presence-in-room status of the living room 1040 has been in an absent state in the past.

In a case of using a rule that the number of counts that a random variable X takes Xn is expressed by N(Xn), as shown in Equation 1, the probability P is obtained by dividing the number of counts N(A0) that the random variable A takes A0 by the total number of counts N(A0) + N(A1) of the number of counts N(A0) that the random variable A takes A0 and the number of counts N(A1) that the random variable A takes A1.

Equation 1

$$P = \frac{N(A0)}{N(A0) + N(A1)} \qquad \cdots (\text{Equation } 1)$$

The probability P expresses the standard pattern 1162 of the presence-in-room rate of the living room 1040. From the standard pattern 1162 of the presence-in-room rate of the living room 1040, a habit regarding a time at which a person is present in the living room 1040 and the like is grasped.

### 1.7.3 Case where person has habit of staving in living room at specific time

Fig. 8 is a time chart showing a time history of a presence-in-room status of a living room when a person has a habit of staying in the living room at a specific time. Fig. 9 is a graph showing a standard pattern of a presence-in-room rate of a living room when a person has a habit of staying in the living room at a specific time in the first embodiment.

A standard pattern 1162 of a presence-in-room rate of the living room 1040 shown in Fig. 9 is obtained from a time history 1140 of a presence-in-room status of the living room 1040 shown in Fig. 8. When a person has a habit of staying in the living room 1040 around 7 o'clock and around 19 o'clock as shown in Fig. 8, the standard pattern 1162 of the presence-in-room rate of the living room 1040 having clear peaks at around 7 o'clock and around 19 o'clock is obtained as shown in Fig. 9.

In a case where the standard pattern 1162 of the presence-in-room rate of the living room 1040 shown in Fig. 9 is obtained when the control presence-in-room rate 1180 is the standard pattern 1162 of the presence-in-room rate of the living room 1040, and the target room temperature 1220 of the living room 1040 during heating increases and the target room temperature 1220 of the living room 1040 during cooling decreases as the control presence-in-room rate 1180 increases, the target room temperature 1220 of the living room 1040 during heating is brought close to the set room temperature 1200 of the living room 1040 while the target room temperature 1220 of the living room 1040 during cooling is brought close to the set room temperature 1200 of the living room 1040 when the presence-in-room status of the living room 1040 is in an absent state but a possibility that a person enters the living room 1040 is high. Therefore, when a person enters the living room 1040, there is a high possibility that a thermal environment of the living room 1040 is in a comfortable state.

### 1.7.4 Case where person does not have habit of staving in living room at specific time

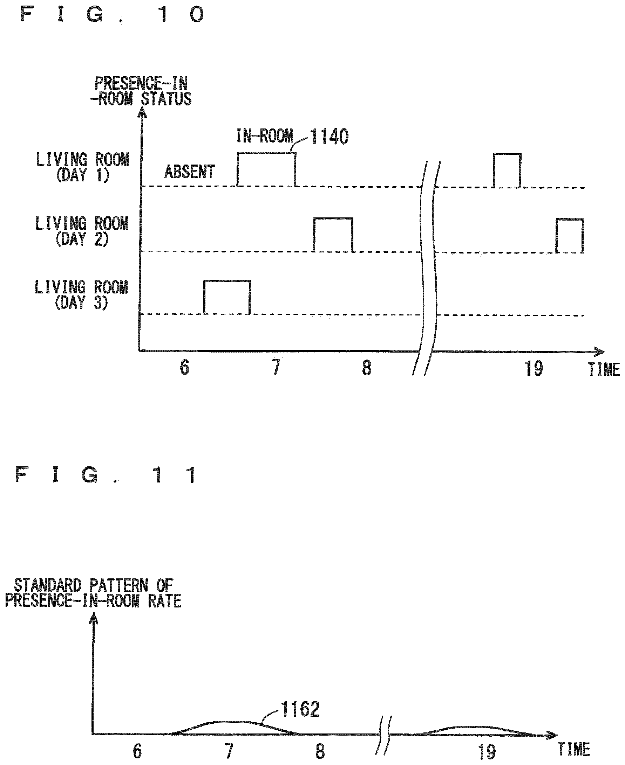

Fig. 10 is a time chart showing a time history of a presence-in-room status of the living room when a person does not have a habit of staying in the living room at a specific time. Fig. 11 is a graph showing a standard pattern of a presence-in-room rate of the living room when a person does not have a habit of staying in the living room at a specific time in the first embodiment.

A standard pattern 1162 of a presence-in-room rate of the living room 1040 shown in Fig. 11 is obtained from a time history 1140 of a presence-in-room status of the living room 1040 shown in Fig. 10. As shown in Fig. 10, in a case where a time of staying in the living room 1040 in the morning varies from day to day, a time of staying in the living room 1040 in the evening varies from day to day, and absence may occur in the living room 1040 in the evening, the standard pattern 1162 of the presence-in-room rate of the living room 1040 having no definite peak is obtained as shown in Fig. 11.

In a case where the standard pattern 1162 of the presence-in-room rate of the living room 1040 shown in Fig. 11 is obtained when the control presence-in-room rate 1180 is the standard pattern 1162 of the presence-in-room rate of the living room 1040, and the target room temperature 1220 of the living room 1040 during heating increases and the target room temperature 1220 of the living room 1040 during cooling decreases as the control presence-in-room rate 1180 increases, the target room temperature 1220 of the living room 1040 during heating is maintained lower than the set room temperature 1200 of the living room 1040 while the target room temperature 1220 of the living room 1040 during cooling is maintained higher than the set room temperature 1200 of the living room 1040 when the presence-in-room status of the living room 1040 is in an absent state.

Therefore, when a person enters the living room 1040, there is a high possibility that the thermal environment of the living room 1040 has not become a comfortable state, and it will take some time for heating or cooling to be sufficiently performed and for the thermal environment to become a comfortable state. That is, when a time at which a person is present in the living room 1040 does not have regularity, it is difficult to suppress the thermal environment from becoming an uncomfortable state by heating or cooling the living room 1040 in advance.

### 1.7.5 Regularity of movement from kitchen to living room

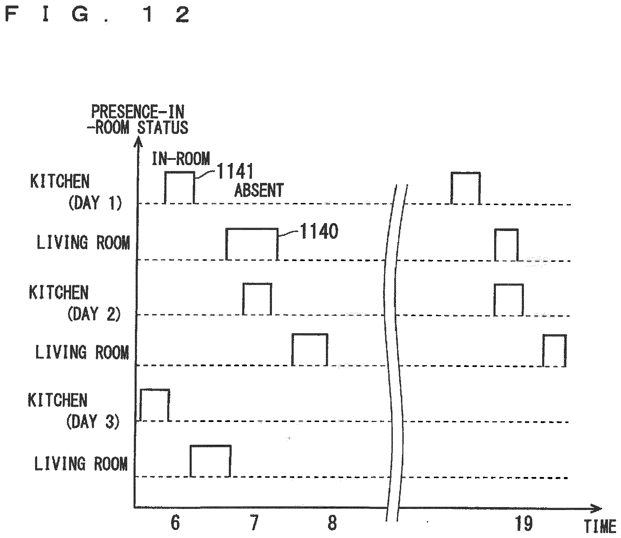

Fig. 12 is shows a time history of presence-in-room statuses of a living room and a kitchen when a person does not have a habit of staying in the living room at a specific time. The time history 1140 of the presence-in-room status of the living room 1040 shown in Fig. 12 is the same as the time history 1140 of the presence-in-room status of the living room 1040 shown in Fig. 10.

As shown in Fig. 12, even when a person does not have a habit of staying in the living room 1040 at a specific time, regardless of a time at which the presence-in-room status of the living room 1040 is in an in-room state, a time period from a time at which the presence-in-room status of the kitchen 1041 has changed from an in-room state to an absent state to a time at which the presence-in-room status of the living room 1040 has changed from an absent state to an in-room state is 30 to 60 minutes, which is approximately constant.

That is, even when the time at which the presence-in-room status of the living room 1040 becomes an in-room state does not have regularity, a time period from the time at which the presence-in-room status of the kitchen 1041 has changed from an in-room state to an absent state to the time at which the presence-in-room status of the living room 1040 has changed from an absent state to an in-room state has regularity. This regularity comes from people's habit of cooking in the kitchen 1041, dining in the dining room, and spending time in the living room 1040.

1.7.6 Conditional probability of living room

The control presence-in-room rate 1180 changes from the standard pattern 1162 of the presence-in-room rate of the living room 1040 to the conditional presence-in-room rate 1161 of the living room 1040, thereby an actual presence-in-room status of the living room 1040 is reflected by the control presence-in-room rate 1180.

In a case of using a rule that a conditional probability that a random variable X takes Xn when a random variable Y takes Yn is expressed by P(Xn | Yn), since the random variable A expressing a presence-in-room status of the living room 1040 takes A0 in a case of an in-room state, while the random variable B expressing an occurrence state of an event that a presence-in-room status of the kitchen 1041 has changed from an absent state to an in-room state takes B0 when this event occurs, the conditional presence-in-room rate 1161 of the living room 1040 is expressed by P(A0 | B0). The conditional presence-in-room rate 1161 of the living room 1040 is calculated by using, as prior information, the random variable B expressing the occurrence state of the event that the presence-in-room status of the kitchen 1041 has changed from an absent state to an in-room state.

In a case where a person is always present in the living room 1040 when the presence-in-room status of the kitchen 1041 has changed from an in-room state to an absent state, P(A0 | B0) expressing the conditional presence-in-room rate 1161 of the living room 1040 is 1, as shown in Equation 2.

Equation 2

$$P(A0 \mid B0) = 1 \quad \cdots (\text{Equation } 2)$$

In general, however, since it is not always that a person is present in the living room 1040 when the presence-in-room status of the kitchen 1041 has changed from an in-room state to an absent state, P(A0 | B0) expressing the conditional presence-in-room rate 1161 of the living room 1040 is less than 1, as shown in Equation 3.

Equation 3

$$P(A0 \mid B0) < 1 \quad \cdots (\text{Equation } 3)$$

1.8 Calculation of standard pattern of presence-in-room rate of living room

The time history 1140 of the presence-in-room status of the living room 1040 includes a time history of a presence-in-room status of the living room 1040 for the past M days. A time history of the presence-in-room status of the living room 1040 for one day includes N presence-in-room statuses of living room 1040. The N presence-in-room statuses of the living room 1040 are discretely recorded.

When a presence-in-room status O(i, m, n) of the living room 1040 at an n-th time on an m-th day is a binary variable, and it takes 0 in a case of an absent state and takes 1 in a case of an in-room state, Pavg(i, n) expressing the standard pattern 1162 of the presence-in-room rate of the living room 1040 takes a value shown in Equation 4 at the n-th time.

Equation 4

$$\text{Pavg}(i, n) = \frac{1}{M} \times \sum_{m=1}^{M} O(i, m, n) \quad \cdots (\text{Equation } 4)$$

The standard pattern 1162 of the presence-in-room rate of the living room 1040 may be calculated by another method. For example, a technique described in Japanese Patent Publication No. 3119082 may be used, the time history 1140 of the presence-in-room status of the living room 1040 may be classified into a plurality of clusters, a standard pattern of the presence-in-room rate of the living room 1040 may be created for each of the plurality of clusters, a cluster that is most similar to the time history of the presence-in-room status of the living room 1040 on that day may be selected from the plurality of clusters, and the standard pattern of the presence-in-room rate of the living room 1040 created for the selected cluster may be set as the standard pattern 1162 of the presence-in-room rate of the living room 1040 on that day.

The standard pattern 1162 of the presence-in-room rate of the living room 1040 is calculated and stored in the memory 1102 before control of the air conditioner 1082 is performed.

1.9 Calculation of conditional presence-in-room rate of living room

The conditional presence-in-room rate 1161 of the living room 1040 indicates a probability that a person is present in the living room 1040 by a second time after a set time period T2 from a first time at which a change from an in-room state to an absent state has occurred in the presence-in-room status of the kitchen 1041.

The set time period T2 may be a fixed value or may be a variable value that can be changed by the user 1900. The conditional presence-in-room rate 1161 of the living room 1040 is calculated to take a value between the first time and the second time. Thus, only when an elapsed time from the first time is short and the conditional presence-in-room rate 1161 of the living room 1040 is accurately calculated, the conditional presence-in-room rate 1161 of the living room 1040 is used for controlling the air conditioner 1082.

In the calculation of the conditional presence-in-room rate 1161 of the living room 1040 by the conditional presence-in-room rate calculation unit 1121, the number of counts N2 that a change from an in-room state to an absent state has occurred in the presence-in-room status of the kitchen 1041 is obtained from the time history 1141 of the presence-in-room status of the kitchen 1041.

Further, from the time history 1140 of the presence-in-room status of the living room 1040 and from the time history 1141 of the presence-in-room status of the kitchen 1041, the number of counts n2(t) indicating the number of changes in the presence-in-room status of the living room 1040 to an in-room state between the first time and a time after a time period t from the first time is obtained. The number of counts n2(t) is obtained for each of all possible values of t between 0 and T2. Therefore, by obtaining the number of counts n2(t), the number of counts n2(T2) indicating the number of changes in the presence-in-room status of the living room 1040 to an in-room state between the first time and the second time after the set time period T2 from the first time is also obtained.

The number of counts that the presence-in-room status of the living room 1040 becomes an in-room state between the time after the time period t from the first time and the second time is n2(T2) - n2(t). For this reason, at the time after the time period t from the first time, the conditional presence-in-room rate 1161 of the living room 1040 is a ratio of a count difference n2(T2) - n2(t) obtained by subtracting the number of counts n2(t) from the number of counts n2(T2) to the first number of counts N2, as shown in Equation 5.

Equation 5

$$\frac{n2(T2) - n2(t)}{N2} \quad \cdots \text{(Equation 5)}.$$

In a case where the conditional presence-in-room rate 1161 of the living room 1040 is the ratio shown in the Equation 5 at the time after the time period t from the first time, a value of the conditional presence-in-room rate 1161 of the living room 1040 taken at the time after the time period t from the first time decreases as the ratio of the number of counts n2(t) to the number of counts N2 increases. This reflects that the possibility that a person is present in the living room 1040 by the second time decreases as the ratio of the number of counts n2(t) to the number of counts N2 increases.

The conditional presence-in-room rate 1161 of the living room 1040 is calculated and stored in the memory 1102 before control of the air conditioner 1082 is performed.

1.10 Calculation of control presence-in-room rate

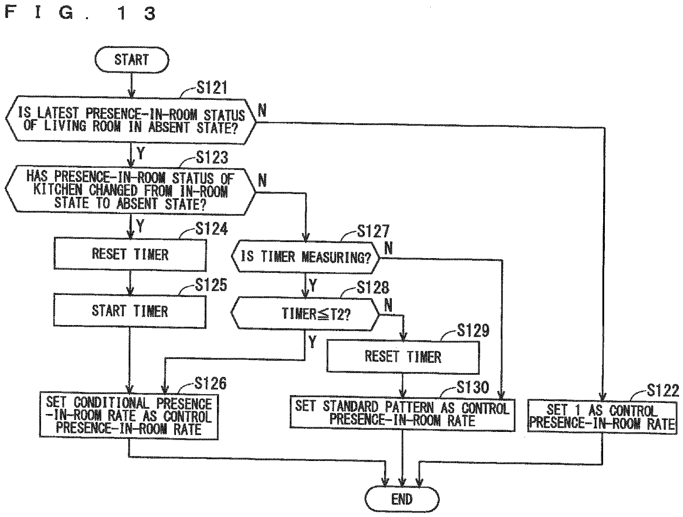

Fig. 13 is a flowchart showing an operation of the controller when a control presence-in-room rate is calculated in the first embodiment.

In step S121 shown in Fig. 13, the control presence-in-room rate calculation unit 1123 determines whether or not a latest presence-in-room status of the living room 1040 is in an absent state. When the presence-in-room status is not in an absent state, the process proceeds to step S122. When the presence-in-room status is in an absent state, the process proceeds to step S123.

In step S122, the control presence-in-room rate calculation unit 1123 sets 1 as the control presence-in-room rate 1180. Thus, when the presence-in-room status of the living room 1040 is in an in-room state, the air conditioner 1082 is controlled such that the target room temperature 1220 of the living room 1040 serves as the set room temperature 1200 of the living room 1040.

In step S123, the control presence-in-room rate calculation unit 1123 compares a latest presence-in-room status of the kitchen 1041 with a presence-in-room status of the kitchen 1041 immediately before thereof, and determines whether or not a change from an in-room state to an absent state has occurred in the presence-in-room status of the kitchen 1041. When the change has occurred, the process proceeds to step S124. When the change has not occurred, the process proceeds to step S127. The process proceeds to step S127 when a state where the presence-in-room status of the kitchen 1041 is in an in-room state is continuing, or a state where the presence-in-room status of the kitchen 1041 is in an absent state is continuing.

In step S124, the control presence-in-room rate calculation unit 1123 causes the timer 1104 to reset time measurement, and in step S125 following step S124, the control presence-in-room rate calculation unit 1123 causes the timer 1104 to start time measurement. As a result, the timer 1104 can measure an elapsed time from a time at which a change from an in-room state to an absent state has occurred in the presence-in-room status of the kitchen 1041, and the control presence-in-room rate calculation unit 1123 can obtain this elapsed time from the timer 1104.

In step S126 following step S125, the control presence-in-room rate calculation unit 1123 sets the conditional presence-in-room rate 1161 of the living room 1040 as the control presence-in-room rate 1180, and the process is ended. As a result, when the presence-in-room status of the living room 1040 is in an absent state, from immediately after the time at which a change from an in-room state to an absent state has occurred in the presence-in-room status of the kitchen 1041, the air conditioner 1082 is controlled such that the air-conditioning heat quantity decreases as the conditional presence-in-room rate 1161 of the living room 1040 decreases.

In step S127, the control presence-in-room rate calculation unit 1123 determines whether or not the timer 1104 is measuring a time period. When the timer 1104 is measuring a time period, the process proceeds to step S128. When the timer 1104 is not measuring a time period, the process proceeds to step S130.

In step S128, the control presence-in-room rate calculation unit 1123 determines whether or not the time period being measured by the timer 1104 is equal to or less than the set time period T2. When the time period is equal to or less than the set time period T2, the process proceeds to step S126. When the time period is not equal to or not less than the set time period T2, the process proceeds to step S129.

In step S126 following step S128, as described above, the control presence-in-room rate calculation unit 1123 sets the conditional presence-in-room rate 1161 of the living room 1040 as the control presence-in-room rate 1180, and the process is ended. As a result, when the presence-in-room status of the living room 1040 is in an absent state, between the first time at which a change from an in-room state to an absent state has occurred in the presence-in-room status of the kitchen 1041 and the second time after the set time period T2 from the first time, the air conditioner 1082 is controlled such that the air-conditioning heat quantity decreases as the conditional presence-in-room rate 1161 of the living room 1040 decreases.

In step S129, the control presence-in-room rate calculation unit 1123 causes the timer 1104 to reset time measurement.

In step S130 following step S129, the control presence-in-room rate calculation unit 1123 sets the standard pattern 1162 of the presence-in-room rate of the living room 1040 as the control presence-in-room rate 1180, and the process is ended. As a result, when the presence-in-room status of the living room 1040 is in an absent state, after the second time, the air conditioner 1082 is controlled such that the air-conditioning heat quantity decreases as the standard pattern 1162 of the presence-in-room rate of the living room 1040 decreases.

According to the operation of the controller 1083 shown in Fig. 13, when the presence-in-room status of the living room 1040 is in an absent state, the control presence-in-room rate 1180 adopts the conditional presence-in-room rate 1161 of the living room 1040 immediately after the first time at which a change from an in-room state to an absent state has occurred in the presence-in-room status of the kitchen 1041.

The control presence-in-room rate 1180 that adopts the conditional presence-in-room rate 1161 of the living room 1040 remains to be the conditional presence-in-room rate 1161 of the living room 1040 until the presence-in-room status of the living room 1040 changes to an in-room state or until the second time after the set time period T2 from the first time. The control presence-in-room rate 1180 that adopts the conditional presence-in-room rate 1161 of the living room 1040 changes to 1 when the presence-in-room status of the living room 1040 has changed to an in-room state, and changes to the standard pattern 1162 of the presence-in-room rate of the living room 1040 after the second time.

As a result, immediately after the first time at which a change from an in-room state to an absent state has occurred in the presence-in-room status of the kitchen 1041 when the presence-in-room status of the living room 1040 is in an absent state, the air conditioner 1082 is controlled such that the air-conditioning heat quantity decreases as the conditional presence-in-room rate 1161 of the living room 1040 decreases.

This control is continued until the presence-in-room status of the living room 1040 changes to an in-room state or until the second time after the set time period T2 from the first time. After the second time, instead of this control, the air conditioner 1082 is controlled such that the air-conditioning heat quantity decreases as the standard pattern 1162 of the presence-in-room rate of the living room 1040 decreases.

1.11 Determination of target room temperature

The target room temperature 1220 of the living room 1040 during heating is equal to or higher than a lower limit value and equal to or lower than an upper limit value, and increases as the control presence-in-room rate 1180 increases. The upper limit value of the target room temperature 1220 of the living room 1040 during heating is the set room temperature 1200 of the living room 1040. The lower limit value of the target room temperature 1220 of the living room 1040 during heating is predetermined.

The target room temperature 1220 of the living room 1040 during cooling is equal to or higher than a lower limit value and equal to or lower than an upper limit value, and decreases as the control presence-in-room rate 1180 increases. The lower limit value of the target room temperature 1220 of the living room 1040 during cooling is the set room temperature 1200 of the living room 1040. The upper limit value of the target room temperature 1220 of the living room 1040 during cooling is predetermined.

Each of the lower limit value of the target room temperature 1220 of the living room 1040 during heating and the upper limit value of the target room temperature 1220 of the living room 1040 during cooling may be a fixed value determined not to lose comfort or may be a variable value that can be changed by the user 1900 depending on the situation.

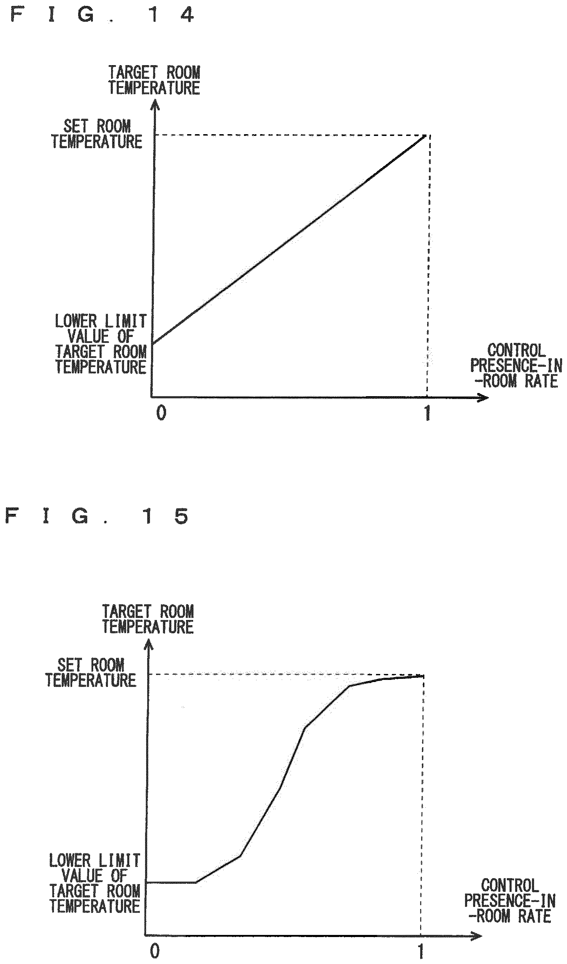

Fig. 14 is a graph showing a relationship between a control presence-in-room rate and a target room temperature of the living room during heating in the first embodiment.

In the relationship between the control presence-in-room rate 1180 and the target room temperature 1220 of the living room 1040 during heating shown in Fig. 14, the target room temperature 1220 of the living room 1040 during heating linearly increases as the control presence-in-room rate 1180 increases. According to the relationship between the control presence-in-room rate 1180 and the target room temperature 1220 of the living room 1040 during heating shown in Fig. 14, in a case where the control presence-in-room rate 1180 is high, the target room temperature 1220 of the living room 1040 during heating is brought close to the set room temperature 1200 of the living room 1040, which is the upper limit value, and comfort of air-conditioning is improved, while in a case where the control presence-in-room rate 1180 is low, the target room temperature 1220 of the living room 1040 during heating is brought close to the lower limit value, and energy required for air-conditioning is reduced.

Fig. 15 is a graph showing a relationship between a control presence-in-room rate and a target room temperature of the living room during heating in the first embodiment.

In the relationship between the control presence-in-room rate 1180 and the target room temperature 1220 of the living room during heating shown in Fig. 15, a line indicating the relationship between the control presence-in-room rate 1180 and the target room temperature 1220 of the living room during heating has a sigmoid curve shape, and the target room temperature 1220 of the living room 1040 during heating nonlinearly increases as the control presence-in-room rate 1180 increases.

In the relationship between the control presence-in-room rate 1180 and the target room temperature 1220 of the living room 1040 during heating shown in Fig. 15, in a case where the control presence-in-room rate 1180 is smaller than a lower limit threshold value, the target room temperature 1220 of the living room 1040 during heating becomes extremely close to the lower limit value, in a case where the control presence-in-room rate 1180 is larger than an upper limit threshold value, the target room temperature 1220 of the living room 1040 during heating is extremely close to the set room temperature 1200 of the living room 1040, which is the upper limit value, and in a case where the control presence-in-room rate 1180 is equal to or higher than the lower limit threshold value and is equal to or lower than the upper limit threshold value, the target room temperature 1220 of the living room 1040 increases as the control presence-in-room rate 1180 during heating increases.

According to the relationship between the control presence-in-room rate 1180 and the target room temperature 1220 of the living room 1040 during heating shown in Fig. 15, in a case where the control presence-in-room rate 1180 is high, the target room temperature 1220 of the living room 1040 during heating is brought close to the set room temperature 1200 of the living room 1040, which is the upper limit value, and comfort of air-conditioning is improved, while in a case where the control presence-in-room rate 1180 is low, the target room temperature 1220 of the living room 1040 during heating is brought close to the lower limit value, and energy required for air-conditioning is reduced. In addition, the effect of improving comfort of air-conditioning increases when the control presence-in-room rate 1180 is high, and the effect of reducing energy required for air-conditioning increases when the control presence-in-room rate 1180 is low.

The relationship between the control presence-in-room rate 1180 and the target room temperature 1220 of the living room 1040 during heating may be other than those shown in Fig. 14 or Fig. 15. Generally speaking, the relationship between the control presence-in-room rate 1180 and the target room temperature 1220 of the living room 1040 during heating is defined such that, when considering the target room temperature 1220 of the living room 1040 during heating, which is a function of the control presence-in-room rate 1180, the function is a monotonically increasing function, and the target room temperature 1220 of the living room 1040 during heating takes a value equal to or greater than the lower limit value and equal to or less than the set room temperature 1200 of the living room 1040, which is the upper limit value.

The relationship between the control presence-in-room rate 1180 and the target room temperature 1220 of the living room 1040 during cooling is defined such that, when considering the target room temperature 1220 of the living room 1040, which is a function of the control presence-in-room rate 1180, the function is a monotonically decreasing function, and the target room temperature 1220 of the living room 1040 during cooling takes a value that is equal to or greater than the set room temperature 1200 of the living room 1040, which is the lower limit value, and is equal to or less than the upper limit value.

1.12 Operation example

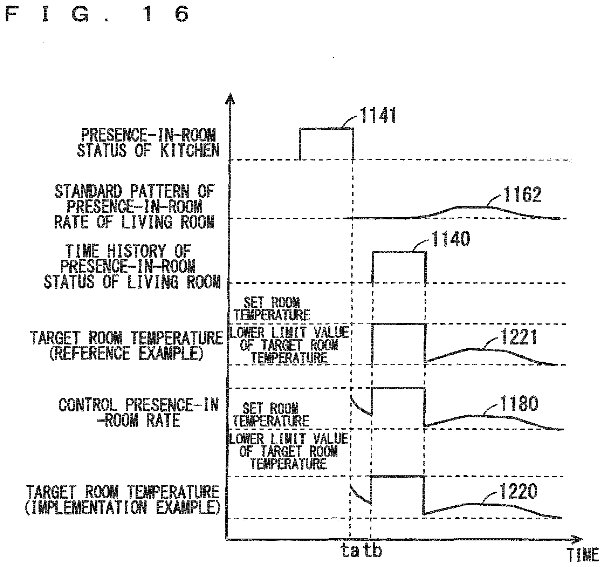

Fig. 16 is a time chart showing an operation example of the air conditioner in the first embodiment. Fig. 16 shows a time history 1141 of a presence-in-room status of the kitchen 1041, a standard pattern 1162 of a presence-in-room rate of the living room 1040, a time history 1140 of a presence-in-room status of the living room 1040, a target room temperature 1221 when control as a reference example is performed, a control presence-in-room rate 1180, and a target room temperature 1220 when control as an implementation example is performed.

In a case where the control as the implementation example is performed, the control presence-in-room rate 1180 is 1 when a presence-in-room status of the living room 1040 is in an in-room state. Further, when the presence-in-room status of the living room 1040 is in an absent state, between a time ta at which the presence-in-room status of the kitchen 1041 has changed from an in-room state to an absent state and a time tb at which the presence-in-room status of the living room 1040 has changed from an absent state to an in-room state, the control presence-in-room rate 1180 adopts the conditional presence-in-room rate 1161 of the living room 1040, and after the second time, the control presence-in-room rate 1180 adopts the standard pattern 1162 of the presence-in-room rate of the living room 1040.

For this reason, as shown in Fig. 16, when the presence-in-room status of the living room 1040 is in an in-room state, the target room temperature 1220 of the living room 1040 adopts the set room temperature 1200 of the living room 1040, and when the presence-in-room status of the living room 1040 is in an absent state, the target room temperature 1220 of the living room 1040 increases as the conditional presence-in-room rate 1161 of the living room 1040 increases between the time ta and the time tb, and the target room temperature 1220 of the living room 1040 increases as the standard pattern 1162 of the presence-in-room rate of the living room 1040 increases after the second time.

In a case where the control as the reference example is performed, the control presence-in-room rate 1180 is 1 when a presence-in-room status of the living room 1040 is in an in-room state. Further, when the presence-in-room status of the living room 1040 is an absent state, the control presence-in-room rate 1180 adopts the standard pattern 1162 of the presence-in-room rate of the living room 1040. Therefore, as shown in Fig. 16, when the presence-in-room status of the living room 1040 is an in-room state, the target room temperature 1221 of the living room 1040 adopts the set room temperature 1200 of the living room 1040, and when the presence-in-room status of the living room 1040 is in an absent state, the target room temperature 1221 of the living room 1040 increases as the standard pattern 1162 of the presence-in-room rate of the living room 1040 increases.

The target room temperature 1220 of the living room 1040 when the control as the implementation example is performed is different from the target room temperature 1221 of the living room 1040 when the control as the reference example is performed in that the target room temperature 1220 of the living room 1040 increases as the conditional presence-in-room rate 1161 of the living room 1040 increases between the time ta and the time tb.

In the operation example of the air conditioner 1082 shown in Fig. 16, since the conditional presence-in-room rate 1161 of the living room 1040 is high and the standard pattern 1162 of the presence-in-room rate of the living room 1040 is low between the time ta and the time tb, the target room temperature 1220 of the living room 1040 increases when the control as the implementation example is performed, and the target room temperature 1221 of the living room 1040 decreases when the control as the reference example is performed, between the time ta and the time tb.

Therefore, in a case where the control as the implementation example is performed, the room temperature of the living room 1040 is close to the set room temperature 1200 when a person enters the living room 1040, but in a case where the control as the reference example is performed, the room temperature of the living room 1040 has not become close to the set room temperature 1200 when a person enters the living room 1040, and it takes time until the room temperature of the living room 1040 approaches the set room temperature 1200.

Therefore, in the case where the control as the implementation example is performed, a comfortable thermal environment is provided to a person entering the living room 1040, as compared with the case where the control as the reference example is performed.

1.13 Advantages of first embodiment

According to the first embodiment, a change from an in-room state to an absent state in a presence-in-room status of the kitchen 1041, which affects the presence-in-room status of the living room 1040, is reflected in the air-conditioning heat quantity, and the air-conditioning heat quantity approaches the one suitable for the presence-in-room status of the living room 1040. This improves comfort of air-conditioning and reduces energy required for air-conditioning.

2 Second Embodiment

2.1 Introduction

A second embodiment relates to a house with air conditioner, an air-conditioning system, and a controller.

A main difference between the first embodiment and the second embodiment is that, in the first embodiment, the prior information of the conditional presence-in-room rate 1161 of the living room 1040 is an occurrence state of a change from an in-room state to an absent state in the presence-in-room status of the kitchen 1041, but in the second embodiment, prior information of a conditional presence-in-room rate of the living room is an occurrence state of exceeding of a threshold value of a time period during which a presence-in-room status of the living room is in an absent state.

In addition, a main difference between the first embodiment and the second embodiment is also that, in the first embodiment, a change from an in-room state to an absent state in the presence-in-room status of the kitchen 1041 serves as a trigger to use the conditional presence-in-room rate 1161 of the living room 1040, but in the second embodiment, a change from an in-room state to an absent state in the presence-in-room status of the living room serves as a trigger to use a conditional presence-in-room rate of the living room.

The technique adopted in the first embodiment may also be adopted in the second embodiment as long as the above main difference is not lost.

2.2 Air-conditioning system

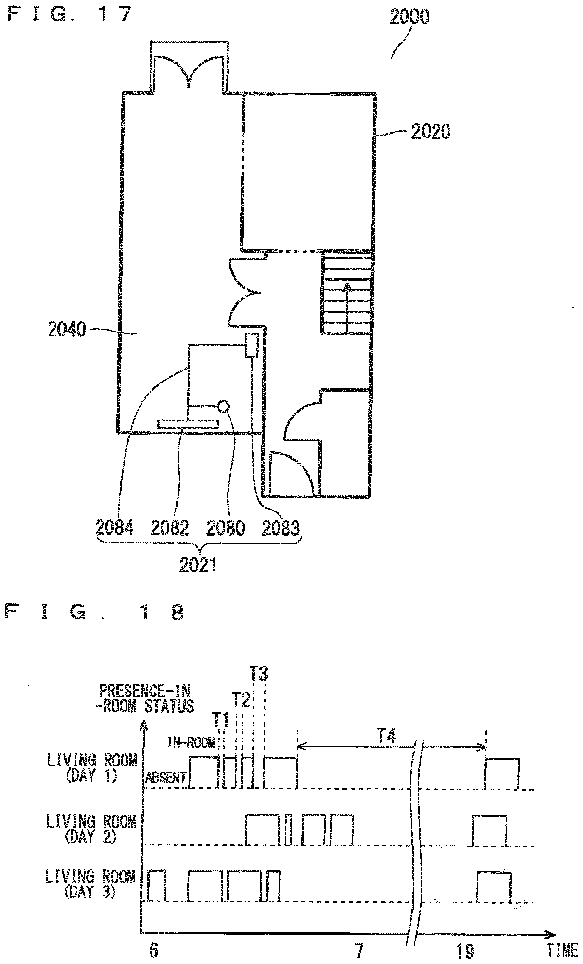

Fig. 17 is a schematic view showing a house with air conditioner of the second embodiment.

A house with air conditioner 2000 shown in Fig. 17 includes a house 2020 and an air-conditioning system 2021. The house 2020 has a living room 2040. The air-conditioning system 2021 includes a presence-in-room sensor 2080, an air conditioner 2082, a controller 2083, and a communication path 2084. The house 2020 and the living room 2040 are similar to the house 1020 and the living room 1040 of the first embodiment, respectively.

The presence-in-room sensor 2080 is installed in the living room 2040 and detects a presence-in-room status of the living room 2040. Thus, the presence-in-room sensor 2080 serves as a detection mechanism that detects a presence-in-room status of the living room 2040.

The air conditioner 2082 is installed in the living room 2040 and performs air-conditioning of the living room 2040 such that a room temperature of the living room 2040 approaches a set room temperature of the living room 2040.

The controller 2083 is communicably connected to the presence-in-room sensor 2080 via the communication path 2084 and receives a detection signal indicating a presence-in-room status of the living room 2040 from the presence-in-room sensor 2080 via the communication path 2084. The controller 2083 is communicably connected to the air conditioner 2082 via the communication path 2084, and transmits a control signal indicating a target room temperature of the living room 2040, to the air conditioner 2082 via the communication path 2084. Thus, the controller 2083 functions as an air-conditioning control apparatus that controls the air conditioner 2082.

2.3 Presence-in-room status of living room

Fig. 18 is a time chart showing a time history of a presence-in-room status of the living room.

In the time history of the presence-in-room status of the living room 2040 shown in Fig. 18, changes from an in-room state to an absent state in the presence-in-room status of the living room 2040 and changes from an absent state to an in-room state in the presence-in-room status of the living room 2040 frequently occur. The time history of the presence-in-room status of the living room 2040 shown in Fig. 18 is obtained in a case where a person enters the living room 2040 and a person leaves from the living room 2040 frequently.

In a case where control is performed such that a set room temperature of the living room 2040 is set as the target room temperature of the living room 2040 when the presence-in-room status of the living room 2040 is in an in-room state, and a target room temperature 2220 of the living room 2040 increases as a standard pattern of a presence-in-room rate of the living room 2040 increases when the presence-in-room status of the living room 2040 is in an absent state, the target room temperature fluctuates frequently in the living room 2040 when the time history of the presence-in-room status of the living room 2040 is as shown in Fig. 18.

Therefore, comfort of air-conditioning deteriorates due to the fluctuation in the room temperature of the living room 2040, and energy required for air-conditioning increases due to an increase of start and stop of the air conditioner 2082.

As a method for solving this problem, it is conceivable to control the air conditioner 2082 not to lower the target room temperature of the living room 2040 during heating and not to increase the target room temperature of the living room 2040 during cooling when a time period during which a presence-in-room status of the living room 2040 is in an absent state is short.

For example, it may be considered that the time period during which the presence-in-room status of the living room 2040 is in an absent state is measured by a timer or the like, and the air conditioner 2082 is controlled to set the set room temperature of the living room 2040 as the target room temperature of the living room 2040 when the measured time period does not exceed the threshold value, and to lower the target room temperature of the living room 2040 during heating and increase the target room temperature of the living room 2040 during cooling when the measured time period exceeds the threshold value.

2.4 Controller

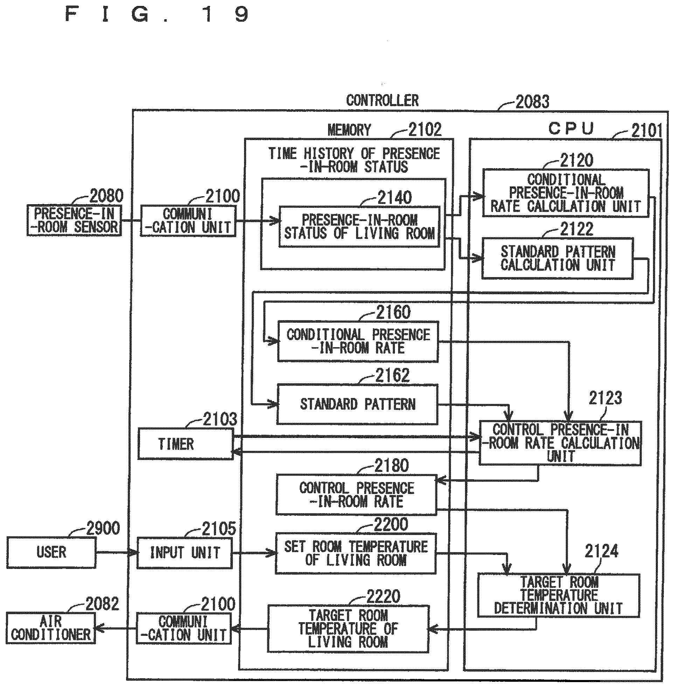

Fig. 19 is a block diagram showing an air-conditioning system of the second embodiment.

As shown in Fig. 19, the controller 2083 includes a communication unit 2100, a CPU 2101, a memory 2102, a timer 2103, and an input unit 2105. The CPU 2101 functions as a conditional presence-in-room rate calculation unit 2120, a standard pattern calculation unit 2122, a control presence-in-room rate calculation unit 2123, and a target room temperature determination unit 2124.

The communication unit 2100 is connected to the presence-in-room sensor 2080 via the communication path 2084 and receives a detection signal indicating a presence-in-room status of the living room 2040, from the presence-in-room sensor 2080. Thus, the communication unit 2100 functions as an acquisition unit that acquires a presence-in-room status of the living room 2040, from the presence-in-room sensor 2080. The communication unit 2100 causes the memory 2102 to store the obtained presence-in-room status of the living room 2040. Thus, the memory 2102 functions as a storage unit that stores a time history 2140 of a presence-in-room status of the living room 2040.

The conditional presence-in-room rate calculation unit 2120 reads the time history 2140 of the presence-in-room status of the living room 2040 from the memory 2102, calculates a conditional presence-in-room rate 2160 of the living room 2040 from the read time history 2140 of the presence-in-room status of the living room 2040, and causes the memory 2102 to store the calculated conditional presence-in-room rate 2160 of the living room 2040. The conditional presence-in-room rate 2160 of the living room 2040 indicates a conditional probability, which is a probability that a person is present in the living room 1040 in response to a change from an in-room state to an absent state in the presence-in-room status of the living room 2040, and is a time series of the conditional probability.

The standard pattern calculation unit 2122 reads the time history 2140 of the presence-in-room status of the living room 2040 from the memory 2102, calculates a standard pattern 2162 of the presence-in-room rate of the living room 2040 from the read time history 2140 of the presence-in-room status of the living room 2040, and causes the memory 2102 to store the calculated standard pattern 2162 of the presence-in-room rate of the living room 2040. The standard pattern 2162 of the presence-in-room rate of the living room 2040 indicates a standard probability that a person is present in the living room 2040, and is a time series showing a time change of this probability. The standard pattern 2162 of the presence-in-room rate of the living room 2040 is calculated similarly to the standard pattern 1162 of the presence-in-room rate of the living room 1040 of the first embodiment.

The timer 2103 measures a time period.

The control presence-in-room rate calculation unit 2123 causes the timer 2103 to reset time measurement, causes the timer 2103 to start time measurement, and obtains a time period being measured from the timer 2103. The control presence-in-room rate calculation unit 2123 reads the conditional presence-in-room rate 2160 of the living room 2040 and the standard pattern 2162 of the presence-in-room rate of the living room 2040 from the memory 2102, obtains a time period being measured from the timer 2103, calculates a control presence-in-room rate 2180 to be used for controlling the air conditioner 2082, and causes the memory 2102 to store the calculated control presence-in-room rate 2180.

The input unit 2105 accepts an input of a set room temperature 2200 of the living room 2040 by a user 2900 and causes the memory 2102 to store the input set room temperature 2200 of the living room 2040.

The target room temperature determination unit 2124 reads the control presence-in-room rate 2180 and the set room temperature 2200 of the living room 2040 from the memory 2102, determines the target room temperature 2220 of the living room 2040, and causes the memory 2102 to store the determined target room temperature 2220 of the living room 2040. The target room temperature 2220 of the living room 2040 during heating decreases as the control presence-in-room rate 2180 decreases. The target room temperature 2220 of the living room 2040 during cooling increases as the control presence-in-room rate 2180 decreases.

Therefore, an air-conditioning heat quantity of the air conditioner 2082 decreases as the control presence-in-room rate 2180 decreases. Since the air conditioner 2082 performs air-conditioning of the living room 2040 in accordance with the target room temperature 2220 of the living room 2040 determined by the target room temperature determination unit 2124, the target room temperature determination unit 2124 functions as a control unit that controls the air conditioner 2082 such that the air-conditioning heat quantity decreases as the control presence-in-room rate 2180 decreases.

The communication unit 2100 reads the target room temperature 2220 of the living room 2040 from the memory 2102, and transmits a control signal indicating the read target room temperature 2220 of the living room 2040, to the air conditioner 2082 via the communication path 2084.

2.5 Random variables

Fig. 7 is a view also for explaining random variables in the second embodiment.

A random variable A shown in Fig. 7 expresses a presence-in-room status of the living room 2040. A random variable B shown in Fig. 7 expresses an occurrence state of exceeding of a threshold of a time period during which a presence-in-room status of the living room 2040 is in an absent state. The random variable A takes an in-room state A0 or an absent state A1. The random variable B takes a state B0 where a time period during which the presence-in-room status of the living room 2040 is in an absent state is equal to or more than the threshold value, or a state B1 where a time period during which the presence-in-room status of the living room 2040 is in an absent state is equal to or less than the threshold value.

2.6 Conditional presence-in-room rate of living room

When the standard pattern 2162 of the presence-in-room rate of the living room 2040 is set as the control presence-in-room rate 2180 immediately after the presence-in-room status of the living room 2040 has changed from an in-room state to an absent state, the target room temperature 2220 of the living room 2040 during heating may decrease and the target room temperature 2220 of the living room 2040 during cooling may increase immediately after the presence-in-room status of the living room 2040 has changed from an in-room state to an absent state.

In order to prevent this, when the time period during which the presence-in-room status of the living room 2040 is in an absent state is equal to or less than the threshold value, instead of the standard pattern 2162 of the presence-in-room rate of the living room 2040, a conditional presence-in-room rate PI indicating a conditional probability, which is a probability that a person is present in the living room 2040 when the time period during which a presence-in-room status of the living room 2040 is in an absent state is equal to or less than the threshold, is set as the control presence-in-room rate 2180. In a case of using a rule that a conditional probability, which is a probability that a random variable X takes Xn when a random variable Y takes Yn, is expressed by P(Xn | Yn), the conditional presence-in-room rate PI of the living room 2040 is that shown in Equation 6.

Equation 6

$$P(A0 \mid B1) = P1 \qquad \cdots (\text{Equation } 6).$$

2.7 Calculation of conditional presence-in-room rate of living room

The conditional presence-in-room rate 2160 of the living room 2040 indicates a probability that a person is present in the living room 2040 by a second time after a set time period T1 from a first time at which a change from an in-room state to an absent state has occurred in the presence-in-room status of the living room 2040. The set time period T1 may be a fixed value or may be a variable value that can be changed by the user 2900.

The conditional presence-in-room rate 2160 of the living room 2040 is calculated to take a value between the first time and the second time. Thus, only when an elapsed time from the first time is short and the conditional presence-in-room rate 2160 of the living room 2040 can be accurately calculated, the conditional presence-in-room rate 2160 of the living room 2040 is used for controlling the air conditioner 2082.

In the calculation of the conditional presence-in-room rate 2160 of the living room 2040 by the conditional presence-in-room rate calculation unit 2120, the number of counts N1 that a change from an in-room state to an absent state has occurred in the presence-in-room status of the living room 2040 is obtained from the time history 2140 of the presence-in-room status of the living room 2040.

Further, from the time history 2140 of the presence-in-room status of the living room 2040, the number of counts n1(t) indicating the number of changes in the presence-in-room status of the living room 2040 to an in-room state between the first time at which a change from an in-room state to an absent state has occurred in the presence-in-room status of the living room 2040 and a time after a time period t from the first time is obtained.

The number of counts n1(t) is obtained for each of all possible values of t between 0 and T1. Therefore, by obtaining the number of counts n1(t), the number of counts n1(T1) indicating the number of changes in the presence-in-room status of the living room 2040 to an in-room state between the first time and the second time after the set time period T1 from the first time is also obtained.

The number of counts that the presence-in-room status of the living room 2040 becomes an in-room state between the time after the time period t from the first time and the second time is n1(T1) - n1(t). For this reason, at the time after the time period t from the first time, the conditional presence-in-room rate 2160 of the living room 2040 is a ratio of a count difference n1(T1) - n1(t) obtained by subtracting the number of counts n1(t) from the number of counts n1(T1) to the number of counts N1, as shown in Equation 7.

Equation 7

$$\frac{n1\,(T1)\,-n1\,(t)}{N1} \quad \cdots (\text{Equation 7}).$$

In a case where the conditional presence-in-room rate 2160 of the living room 2040 is the ratio shown in the Equation 7 at the time after the time period t from the first time, a value of the conditional presence-in-room rate 2160 of the living room 2040 taken at the time after the time t from the first time decreases as the ratio of the number of counts n1(t) to the number of counts N1 increases. This reflects that the possibility that a person is present in the living room 2040 by the second time decreases as the ratio of the number of counts n1(t) to the number of counts N1 increases.

The conditional presence-in-room rate 2160 of the living room 2040 is calculated and stored in the memory 2102 before control of the air conditioner 2082 is performed.

2.8 Calculation of control presence-in-room rate

Before control of the air conditioner 2082 is performed, the conditional presence-in-room rate calculation unit 2120 calculates the conditional presence-in-room rate 2160 of the living room 2040 and causes the memory 2102 to store the calculated conditional presence-in-room rate 2160 of the living room 2040, while the standard pattern calculation unit 2122 calculates the standard pattern 2162 of the presence-in-room rate of the living room 2040 and causes the memory 2102 to store the calculated standard pattern 2162 of the presence-in-room rate of the living room 2040. The conditional presence-in-room rate 2160 of the living room 2040 and the standard pattern 2162 of the presence-in-room rate of the living room 2040 that are stored in the memory 2102 are referred to when control of the air conditioner 2082 is performed.

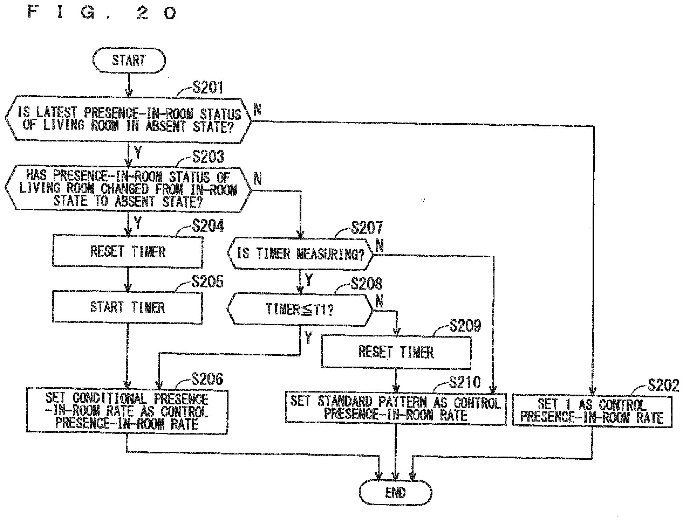

Fig. 20 is a flowchart showing an operation of the controller when a control presence-in-room rate is calculated in the second embodiment.

In step S201 shown in Fig. 20, the control presence-in-room rate calculation unit 2123 determines whether or not a latest presence-in-room status of the living room 2040 is in an absent state. When the presence-in-room status is not in an absent state, the process proceeds to step S202. When the presence-in-room status is in an absent state, the process proceeds to step S203.

In step S202, the control presence-in-room rate calculation unit 2123 sets 1 as the control presence-in-room rate 2180. Thus, when the presence-in-room status of the living room 2040 is in an in-room state, the air conditioner 2082 is controlled such that the target room temperature 2220 of the living room 2040 adopts the set room temperature 2200 of the living room 2040.

In step S203, the control presence-in-room rate calculation unit 2123 compares the latest presence-in-room status of the living room 2040 with a presence-in-room status of the living room 2040 immediately before thereof, and determines whether or not the presence-in-room status of the living room 2040 has changed from an in-room state to an absent state. When the change has occurred, the process proceeds to step S204. When the change has not occurred, the process proceeds to step S207.

In step S204, the control presence-in-room rate calculation unit 2123 causes the timer 2103 to reset time measurement, and in step S205 following step S204, the control presence-in-room rate calculation unit 2123 causes the timer 2103 to start time measurement. As a result, the timer 2103 can measure an elapsed time from a time at which a change from an in-room state to an absent state has occurred in the presence-in-room status of the living room 2040, and the control presence-in-room rate calculation unit 2123 can obtain the elapsed time from the timer 2103.

In step S206 following step S205, the control presence-in-room rate calculation unit 2123 sets the conditional presence-in-room rate 2160 of the living room 2040 that is determined according to the elapsed time as the control presence-in-room rate 2180, and the process is ended. As a result, when the presence-in-room status of the living room 2040 is in an absent state, from immediately after the time at which a change from an in-room state to an absent state has occurred in the presence-in-room status of the living room 2040, the air conditioner 2082 is controlled such that the air-conditioning heat quantity decreases as the conditional presence-in-room rate 2160 of the living room 2040 decreases.

In step S207, the control presence-in-room rate calculation unit 2123 determines whether or not the timer 2103 is measuring a time period. When the timer 2103 is measuring a time period, the process proceeds to step S208. When the timer 2103 is not measuring a time period, the process proceeds to step S210.

In step S208, the control presence-in-room rate calculation unit 2123 determines whether or not the time period being measured by the timer 2103 is equal to or less than the set time period T1. When the time period is equal to or less than the set time period T1, the process proceeds to step S206. When the time period is not equal to or not less than the set time period T1, the process proceeds to step S209.

In step S206 following step S208, as described above, the control presence-in-room rate calculation unit 2123 sets the conditional presence-in-room rate 2160 of the living room 2040 as the control presence-in-room rate 2180, and the process is ended. As a result, when the presence-in-room status of the living room 2040 is in an absent state, between the first time at which a change from an in-room state to an absent state has occurred in the presence-in-room status of the living room 2040 and the second time after the set time period T1 from the first time, the air conditioner 2082 is controlled such that the air-conditioning heat quantity decreases as the conditional presence-in-room rate 2160 of the living room 2040 decreases.

In step S209, the control presence-in-room rate calculation unit 2123 causes the timer 2103 to reset time measurement.

In step S210 following step S209, the control presence-in-room rate calculation unit 2123 sets the standard pattern 2162 of the presence-in-room rate of the living room 2040 as the control presence-in-room rate 2180, and the process is ended. As a result, when the presence-in-room status of the living room 2040 is in an absent state, after the second time, the air conditioner 2082 is controlled such that the air-conditioning heat quantity decreases as the standard pattern 2162 of the presence-in-room rate of the living room 2040 decreases.

When $PI \leq Pavg$ is satisfied while time measurement is being performed by the timer 2103, Pavg may be set as the control presence-in-room rate 2180.

2.9 Operation example

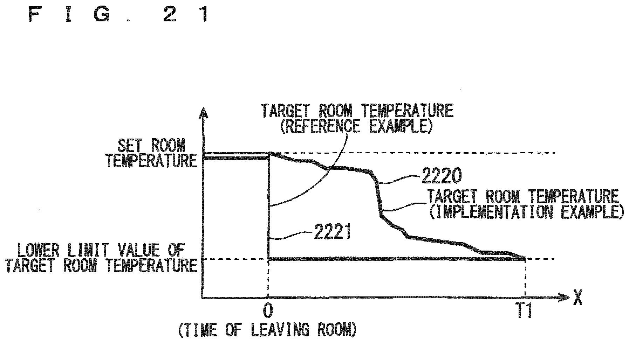

Fig. 21 is a time chart showing an operation example of the air conditioner in the second embodiment. Fig. 21 shows a time change of a target room temperature of the living room when control as an implementation example and a reference example is performed.

In a case where the control as the implementation example is performed, the control presence-in-room rate 2180 is 1 when the presence-in-room status of the living room 2040 is in an in-room state. Further, when the presence-in-room status of the living room 2040 is in an absent state, between the first time at which the presence-in-room status of the living room 2040 has changed from an in-room state to an absent state and the second time after the set time period T1 from the first time, the control presence-in-room rate 2180 adopts the conditional presence-in-room rate 2160 of the living room 2040, and after the second time, the control presence-in-room rate 2180 adopts the standard pattern 2162 of the presence-in-room rate of the living room 2040.

Therefore, as shown in Fig. 21, when the presence-in-room status of the living room 2040 is an in-room state, the target room temperature adopts the set room temperature. Further, when the presence-in-room status of the living room 2040 is in an absent state, the target room temperature increases as the conditional presence-in-room rate 2160 of the living room 2040 increases between the first time and the second time, and the target room temperature increases as the standard pattern 2162 of the presence-in-room rate in the living room 2040 increases after the second time.

In a case where the control as the reference example is performed, the control presence-in-room rate 2180 is 1 when the presence-in-room status of the living room 2040 is in an in-room state. Further, when the presence-in-room status of the living room 2040 is an absent state, the control presence-in-room rate 2180 adopts the standard pattern 2162 of the presence-in-room rate of the living room 2040. Therefore, as shown in Fig. 21, when the presence-in-room status of the living room 2040 is an in-room state, the target room temperature adopts the set room temperature. Further, when the presence-in-room status of the living room 2040 is in an absent state, the target room temperature increases as the standard pattern 2162 of the presence-in-room rate of the living room 2040 increases.

The target room temperature 2220 of the living room when the control as the implementation example is performed is different from a target room temperature 2221 of the living room 2040 when the control as the reference example is performed in that the target room temperature 2220 of the living room 2040 increases as the conditional presence-in-room rate 2160 of the living room 2040 increases between the first time and the second time.

In the operation example of the air conditioner 2082 shown in Fig. 21, since the conditional presence-in-room rate 2160 of the living room 2040 is high and the standard pattern 2162 of the presence-in-room rate of the living room 2040 is low between the first time and the second time, the target room temperature 2220 of the living room 2040 is high when the control as the implementation example is performed, and the target room temperature 2221 of the living room 2040 is low when the control as the reference example is performed, between the first time and the second time.

Therefore, in a case where the control as the implementation example is performed, the room temperature of the living room 2040 is close to the set room temperature 2200 of the living room 2040 when a person enters the living room 2040, but in a case where the control as the reference example is performed, the room temperature of the living room 2040 has not become close to the set room temperature 2200 of the living room 2040 when a person enters the living room 2040, and it takes time until the room temperature of the living room 2040 approaches the set room temperature 2200 of the living room 2040. Therefore, in the case where the control as the implementation example is performed, a comfortable thermal environment is provided to a person entering the living room 2040, as compared with the case where the control as the reference example is performed.

2.10 Advantages of second embodiment

According to the second embodiment, a change from an in-room state to an absent state of the presence-in-room status of the living room 2040, which affects an presence-in-room status of the living room 2040, is reflected in the air-conditioning heat quantity, and the air-conditioning heat quantity approaches the one suitable for a current presence-in-room status of the living room 2040. This improves comfort of air-conditioning and reduces energy required for air-conditioning.

3 Third Embodiment

3.1 Introduction

A third embodiment relates to a set time period T2 for replacing the set time period T2 in the first embodiment.
A main difference between the first embodiment and the third embodiment is that, in the first embodiment, the set time period T2 is a fixed value or a variable value that can be changed by the user 1900, but in the third embodiment, the set time period T2 is determined from a time history 1140 of a presence-in-room status of a living room 1040 and a time history 1141 of a presence-in-room status of a kitchen 1041.

3.2 Determination of set time period T2

When the set time period T2 is determined by a conditional presence-in-room rate calculation unit 1121, from the time history 1140 of the presence-in-room status of the living room 1040 and from the time history 1141 of the presence-in-room status of the kitchen 1041, M time periods t(1), t(2),..., t(M) arranged in ascending order is obtained. Each of the M time periods t(1), t(2),..., t(M) is a time period from a time at which a presence-in-room status of the kitchen 1041 has changed from an presence-in-room status to an absent state to a time at which a presence-in-room status of the living room has changed from an absent state to the presence-in-room status. M is an integer of 2 or more.
In addition, a time difference $\Delta t(i)$ is obtained, which is a time difference t(i+1) - t(i) obtained by subtracting a time period t(i) from a time period t(i + 1) where i is each of 1 to M - 1.
Further, a time difference $\Delta t(j)$ is obtained, which is a maximum time difference out of the time difference $\Delta t(1)$ to the time difference $\Delta t(M - 1)$.
Finally, a time period t(j) is set as the set time period T2.
The time period t(i) is a short time period of about one minute, five minutes, and the like when i is small, is a time period of about several ten minutes when i increases, and is a long time period of about several hours when i further increases. A time period t(i) that is a short time period of about several minutes corresponds to a movement from the kitchen 1041 to the living room 1040. A long time period t(i) of about several hours corresponds to a long-term absent state such as going to bed or going out.
Therefore, in a case where the time difference $\Delta t(j)$ is the maximum time difference, and time periods t(1), ..., t(j) and time periods t(j + 1), ..., t(M) are clearly stratified, the time periods t(1), ..., t(j) correspond to a movement from the kitchen 1041 to the living room 1040, the time periods t(j + 1), ..., t(M) correspond to a long-term absent state, and the time period t(j) serves as a threshold for discriminating between the movement from the kitchen 1041 to the living room 1040 and the long-term absence.
Therefore, by setting the time period t(j) as the set time period T2, there is a higher possibility that the conditional presence-in-room rate 1161 of the living room 1040 is set as the control presence-in-room rate 1180 when the movement from the kitchen 1041 to the living room 1040 is performed, and the standard pattern 1162 of the presence-in-room rate of the living room 1040 is set as the control presence-in-room rate 1180 when the presence-in-room status becomes a long-term absent state, making it possible to reduce energy required for air-conditioning while improving comfort of air-conditioning.
Further, dependence on an experience of the user 1900 is eliminated, and an appropriate set time period T2 is obtained from the time history 1140 of the presence-in-room status of the living room 1040 and from the time history 1141 of the presence-in-room status of the kitchen 1041.

## 4 Fourth Embodiment

### 4.1 Introduction

A fourth embodiment relates to a set time period T1 for replacing the set time period T1 in the second embodiment.

A main difference between the second embodiment and the fourth embodiment is that, in the second embodiment, the set time period T1 is a fixed value or a variable value that can be changed by the user 2900, but in the fourth embodiment, the set time period T1 is determined from a time history 2140 of a presence-in-room status of a living room 2040.

### 4.2 Determination of set time period T1

When the set time period T1 is determined by a conditional presence-in-room rate calculation unit 2120, from the time history 2140 of the presence-in-room status of the living room 2040, M time periods t(1), t(2),..., t(M) arranged in ascending order is obtained. Each of the M time periods t(1), t(2),..., t(M) is a time period from a time at which a presence-in-room status of the living room 2040 has changed from an in-room state to an absent state to a time at which a presence-in-room status of the living room 2040 has changed from an absent state to an in-room state. M is an integer of 2 or more.

In addition, a time difference Δt(i) is obtained, which is a time difference t(i+1) - t(i) obtained by subtracting a time period t(i) from a time period t(i + 1) where i is each of 1 to M - 1.

Further, a time difference Δt(j) is obtained, which is a maximum time difference out of the time difference Δt(1) to the time difference Δt(M - 1).

Finally, the time period t(j) is set as the set time period T1.

The time period t(i) is a short time period of about one minute, five minutes, and the like when i is small, is a time period of about several ten minutes when i increases, and is a long time period of about several hours when i further increases. A time period t(i) that is a short time period of about several minutes corresponds to a short-term absent state. A long time period t(i) of about several hours corresponds to a long-term absent state such as going to bed or going out. Therefore, in a case where the time difference Δt(j) is the maximum time difference, and the time periods t(1), ..., t(j) and the time periods t(j + 1), ..., t(M) are clearly stratified, the time periods t(1), ..., t(j) correspond to a short-term absent state, the time periods t(j + 1), ..., t(M) correspond to a long-term absent state, and the time period t(j) serves as a threshold for discriminating between the short-term absent state and the long-term absence.

Therefore, by setting the time period t(j) as the set time period T1, there is a higher possibility that the conditional presence-in-room rate 2160 of the living room 2040 is set as the control presence-in-room rate 2180 when the presence-in-room status of the living room 2040 becomes a short-term absent state, and the standard pattern 2162 of the presence-in-room rate of the living room 2040 is set as the control presence-in-room rate 2180 when the presence-in-room status of the living room 2040 becomes a long-term absent state, making it possible to reduce energy required for air-conditioning while improving comfort of air-conditioning. Further, dependence on an experience of the user 2900 is eliminated, and an appropriate set time period T1 is obtained from the time history 2140 of the presence-in-room status of the living room 2040 and from the time history of the presence-in-room status of the kitchen.

## 5 Fifth Embodiment

A fifth embodiment relates to a conditional presence-in-room rate 1161 of a living room 1040 for replacing the conditional presence-in-room rate 1161 of the living room 1040 in the first embodiment.

A main difference between the first embodiment and the fifth embodiment is that, in the first embodiment, the conditional presence-in-room rate 1161 of the living room 1040 is the ratio {n2(T2) - n2(t) }/N2 at the time after the time period t from the first time at which a change from an in-room state to an absent state has occurred in the presence-in-room status of the kitchen 1041, but in the fifth embodiment, between a first time and a second time after a set time period T2 from the first time, the conditional presence-in-room rate 1161 of the living room 1040 is a ratio n2(T2)/N2 of the number of counts n2(T2) to the number of counts N2. According to the fifth embodiment, a calculation amount required for calculating the conditional presence-in-room rate 1161 of the living room 1040 is reduced.

## 6 Sixth Embodiment

A sixth embodiment relates to a conditional presence-in-room rate 2160 of a living room 2040 for replacing the conditional presence-in-room rate 2160 of the living room 2040 in the second embodiment.

A main difference between the second embodiment and the sixth embodiment is that, in the second embodiment, the conditional presence-in-room rate 2160 of the living room 2040 is the ratio {n1(T1) - n1(t) }/N1 at the time after the time period t from the first time at which a change from an in-room state to an absent state has occurred in the presence-in-room status of the living room 2040, but in the sixth embodiment, between a first time and a second time after a set time period T1 from the first time, the conditional presence-in-room rate 2160 of the living room 2040 is a ratio n1(T1)/N1 of the number of counts n1(T1) to the number of counts N1. According to the sixth embodiment, a calculation amount required for calculating the conditional presence-in-room rate 2160 of the living room 2040 is reduced.

## 7 Seventh Embodiment

### 7.1 Introduction

A seventh embodiment relates to a controller for replacing the controller in the first embodiment.

A main difference between the first embodiment and the seventh embodiment is that, in the first embodiment, the prior information of the conditional presence-in-room rate 1161 of the living room 1040 is an occurrence state of a change from an in-room state to an absent state in the presence-in-room status of the kitchen 1041, but in the seventh embodiment, prior information of a conditional presence-in-room rate of a living room 1040 is an occurrence state of a change from an in-room state to an absent state in a presence-in-room status of a kitchen 1041, and an occurrence state of exceeding of a threshold of a time period during which a presence-in-room status of a living room 1040 is in an absent state.

The technique adopted in the first embodiment or the second embodiment may also be adopted in the seventh embodiment as long as the above main difference is not lost.

### 7.2 Controller

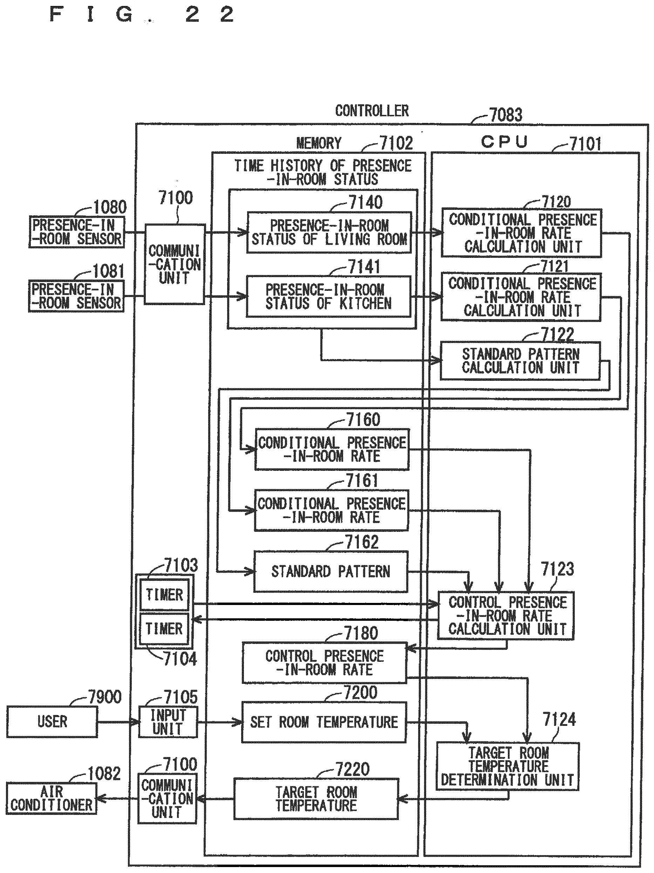

Fig. 22 is a block diagram showing an air-conditioning system including the controller of the seventh embodiment.

A controller 7083 shown in Fig. 22 includes a communication unit 7100, a CPU 7101, a memory 7102, a timer 7103, a timer 7104, and an input unit 7105. The CPU 7101 functions as a conditional presence-in-room rate calculation unit 7120, a conditional presence-in-room rate calculation unit 7121, a standard pattern calculation unit 7122, a control presence-in-room rate calculation unit 7123, and a target room temperature determination unit 7124.

The communication unit 7100 is connected to each of presence-in-room sensors 1080 and 1081 via a communication path 1084, receives a detection signal indicating a presence-in-room status of the living room 1040 from the presence-in-room sensor 1080, and receives a detection signal indicating a presence-in-room status of the kitchen 1041 from the presence-in-room sensor 1081. Thus, the communication unit 7100 functions as an acquisition unit that acquires presence-in-room statuses of the living room 1040 and the kitchen 1041 from the presence-in-room sensors 1080 and 1081.

The communication unit 7100 causes the memory 7102 to store the obtained presence-in-room statuses of the living room 1040 and the kitchen 1041. Thus, the memory 7102 functions as a storage unit that stores a time history 7140 of the presence-in-room status of the living room 1040 and a time history 7141 of the presence-in-room status of the kitchen 1041.

The conditional presence-in-room rate calculation unit 7120 reads the time history 7140 of the presence-in-room status of the living room 1040 from the memory 7102, calculates a conditional presence-in-room rate 7160 of the living room 1040 from the read time history 7140 of the presence-in-room status of the living room 1040, and causes the memory 7102 to store the calculated conditional presence-in-room rate 7160 of the living room 1040.

The conditional presence-in-room rate 7160 of the living room 1040 indicates a conditional probability, which is a probability that a person is present in the living room 1040 in response to a change from an in-room state to an absent state in the presence-in-room status of the living room 1040, and is a time series showing a time change of the conditional probability. The conditional presence-in-room rate 7160 of the living room 1040 is calculated similarly to the conditional presence-in-room rate 2160 of the living room 1040 of the second or sixth embodiment.

The conditional presence-in-room rate calculation unit 7121 reads the time history 7140 of the presence-in-room status of the living room 1040 and the time history 7141 of the presence-in-room status of the kitchen 1041 from the memory 7102, calculates a conditional presence-in-room rate 7161 of the living room 1040 from the read time history 7140 of the presence-in-room status of the living room 1040 and from the read time history 7141 of the presence-in-room status of the kitchen 1041, and causes the memory 7102 to store the calculated conditional presence-in-room rate 7161 of the living room 1040.

The conditional presence-in-room rate 7161 of the living room 1040 indicates a conditional probability, which is a probability that a person is present in the living room 1040 in response to a change from an in-room state to an absent state in the presence-in-room status of the kitchen 1041, and is a time series showing a time change of the conditional probability. The conditional presence-in-room rate 7161 of the living room 1040 is calculated similarly to the conditional presence-in-room rate 1161 of the living room 1040 of the first or fifth embodiment.

The standard pattern calculation unit 7122 reads the time history 7140 of the presence-in-room status of the living room 1040 from the memory 7102, calculates a standard pattern 7162 of the presence-in-room rate of the living room 1040 from the read time history 7140 of the presence-in-room status of the living room 1040, and causes the memory 7102 to store the calculated standard pattern 7162 of the presence-in-room rate of the living room 1040. The standard pattern 7162 of the presence-in-room rate of the living room 1040 indicates a standard probability that a person is present in the living room 1040, and is a time series showing a time change of this probability. The standard pattern 7162 of the presence-in-room rate of the living room 1040 is calculated similarly to the standard pattern 1162 of the presence-in-room rate of the living room 1040 of the first embodiment.

Each of the timers 7103 and 7104 measures a time period.

The control presence-in-room rate calculation unit 7123 causes each of the timers 7103 and 7104 to reset time measurement, causes each of the timers 7103 and 7104 to start time measurement, and obtains a time period being measured from each of the timers 7103 and 7104. The control presence-in-room rate calculation unit 7123 reads the conditional presence-in-room rate 7160 of the living room 1040, the conditional presence-in-room rate 7161 of the living room 1040, and the standard pattern 7162 of the presence-in-room rate of the living room 1040 from the memory 7102, obtains a time period being measured from each of the timers 7103 and 7104, calculates a control presence-in-room rate 7180 to be used for controlling an air conditioner 1082, and causes the memory 7102 to store the calculated control presence-in-room rate 7180.

The input unit 7105 accepts an input of a set room temperature 7200 of the living room 1040 by a user 7900 and causes the memory 7102 to store the input set room temperature 7200 of the living room 1040.

The target room temperature determination unit 7124 reads the control presence-in-room rate 7180 and the set room temperature 7200 of the living room 1040 from the memory 7102, sets a target room temperature 7220 of the living room 1040, and causes the memory 7102 to store the set target room temperature 7220 of the living room 1040. The target room temperature 7220 of the living room 1040 during heating decreases as the control presence-in-room rate 7180 decreases. The target room temperature 7220 of the living room 1040 during cooling increases as the control presence-in-room rate 7180 decreases.

Therefore, an air-conditioning heat quantity of the air conditioner 1082 decreases as the control presence-in-room rate 7180 decreases. Since the air conditioner 1082 performs air-conditioning of the living room 1040 in accordance with the target room temperature 7220 of the living room 1040 determined by the target room temperature determination unit 7124, the target room temperature determination unit 7124 functions as a control unit that controls the air conditioner 1082 such that the air-conditioning heat quantity decreases as the control presence-in-room rate 7180 decreases.

The communication unit 7100 reads the target room temperature 7220 of the living room 1040 from the memory 7102, and transmits a control signal indicating the read target room temperature 7220 of the living room 1040 to the air conditioner 1082 via the communication path 1084.

7.3 Calculation of control presence-in-room rate

Before control of the air conditioner 1082 is performed, the conditional presence-in-room rate calculation unit 7120 calculates the conditional presence-in-room rate 7160 of the living room 1040 and causes the memory 7102 to store the calculated conditional presence-in-room rate 7160 of the living room 1040, the conditional presence-in-room rate calculation unit 7121 calculates the conditional presence-in-room rate 7161 of the living room 1040 and causes the memory 7102 to store the calculated conditional presence-in-room rate 7161 of the living room 1040, and the standard pattern calculation unit 7122 calculates the standard pattern 7162 of the presence-in-room rate of the living room 1040 and causes the memory 7102 to store the calculated standard pattern 7162 of the presence-in-room rate of the living room 1040. The set time period T1 is determined similarly to the set time period T2 in the second or fourth embodiment. A set time period T2 is determined similarly to the set time period T1 in the first or third embodiment.

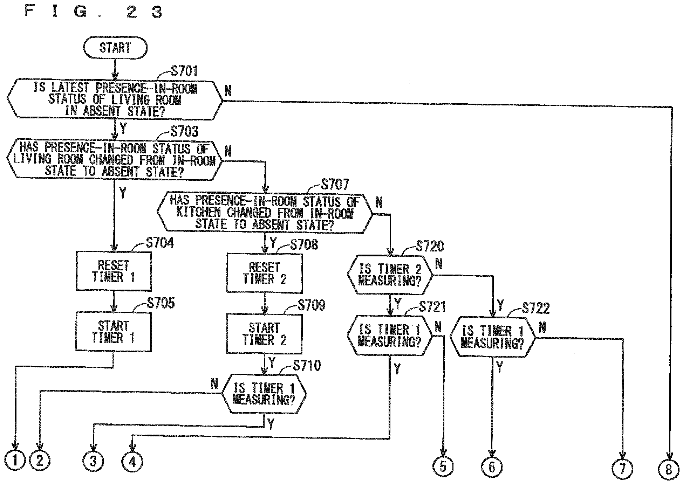

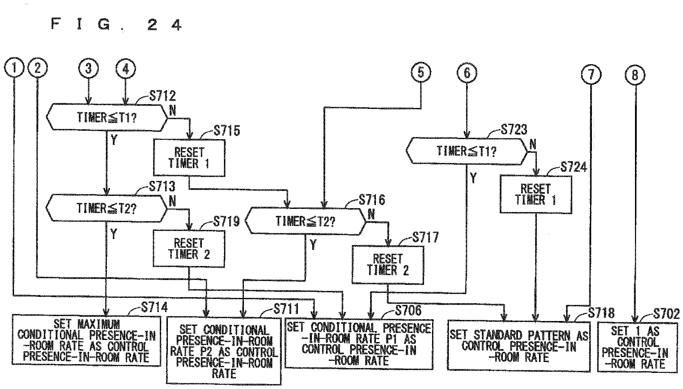

FIGS. 23 and 24 are flowcharts showing an operation of the controller when a control presence-in-room rate is calculated in the seventh embodiment.

In step S701 shown in Fig. 23, the control presence-in-room rate calculation unit 7123 determines whether or not a latest presence-in-room status of the living room 1040 is in an absent state. When the presence-in-room status is not in an absent state, the process proceeds to step S702. When the presence-in-room status is in an absent state, the process proceeds to step S703.

In step S702, the control presence-in-room rate calculation unit 7123 sets 1 as the control presence-in-room rate 7180. Thus, when the presence-in-room status of the living room 1040 is in an in-room state, the air conditioner 1082 is controlled such that the target room temperature 7220 of the living room 1040 adopts the set room temperature 7200 of the living room 1040.

In step S703, the control presence-in-room rate calculation unit 7123 compares the latest presence-in-room status of the living room 1040 with a presence-in-room status of the living room 1040 immediately before thereof, and determines whether or not the presence-in-room status of the living room 1040 has changed from an in-room state to an absent state. When the change has occurred, the process proceeds to step S704. When the change has not occurred, the process proceeds to step S707.

In and after step S704, processing immediately after the presence-in-room status of the living room 1040 has changed from an in-room state to an absent state is executed.

In step S704, the control presence-in-room rate calculation unit 7123 causes the timer 7103 to reset time measurement, and in step S705 following step S704, the control presence-in-room rate calculation unit 7123 causes the timer 7103 to start time measurement. As a result, the timer 7103 can measure an elapsed time from a time at which a change from an in-room state to an absent state has occurred in the presence-in-room status of the living room 1040, and the control presence-in-room rate calculation unit 7123 can obtain the elapsed time from the timer 7103.

In step S706 following step S705, the control presence-in-room rate calculation unit 7123 sets, as the control presence-in-room rate 7180, a conditional presence-in-room rate PI that is the conditional presence-in-room rate 7160 of the living room 1040 when the presence-in-room status of the living room 1040 has changed from an absent state to an in-room state, and the process is ended.

As a result, when the presence-in-room status of the living room 1040 is in an absent state, from immediately after the presence-in-room status of the living room 1040 has changed from an in-room state to an absent state, the air conditioner 1082 is controlled such that the air-conditioning heat quantity decreases as the conditional presence-in-room rate 7160 of the living room 1040 decreases.

In step S707, the control presence-in-room rate calculation unit 7123 compares a latest presence-in-room status of the kitchen 1041 with a presence-in-room status of the kitchen 1041 immediately before thereof, and determines whether or not a change from an in-room state to an absent state has occurred in the presence-in-room status of the kitchen 1041. When the change has occurred, the process proceeds to step S708. When the change has not occurred, the process proceeds to step S720.

In and after step S708, processing immediately after the presence-in-room status of the kitchen 1041 has changed from an in-room state to an absent state is executed.

In step S708, the control presence-in-room rate calculation unit 7123 causes the timer 7104 to reset time measurement, and in step S709 following step S708, the control presence-in-room rate calculation unit 7123 causes the timer 7104 to start time measurement. As a result, the timer 7104 can measure an elapsed time from a time at which a change from an in-room state to an absent state has occurred in the presence-in-room status of the kitchen 1041, and the control presence-in-room rate calculation unit 7123 can obtain this elapsed time from the timer 7104.

In step S710 following step S709, the control presence-in-room rate calculation unit 7123 determines whether or not the timer 7103 is measuring a time period. When the timer 7103 is not measuring a time period, the process proceeds to step S711. When the timer 7103 is measuring a time period, the process proceeds to step S712.

In step S711 following step S710, the control presence-in-room rate calculation unit 7123 sets, as the control presence-in-room rate 7180, a conditional presence-in-room rate P2 that is the conditional presence-in-room rate 7161 of the living room 1040 when the presence-in-room status of the kitchen 1041 has changed from an in-room state to an absent state, and the process is ended.

As a result, when the elapsed time from the time at which the presence-in-room status of the living room 1040 has changed from an in-room state to an absent state has not been measured, from immediately after the presence-in-room status of the kitchen 1041 has changed from an in-room state to an absent state, the air conditioner 1082 is controlled such that the air-conditioning heat quantity decreases as the conditional presence-in-room rate 7161 of the living room 1040 decreases.

In step S712, the control presence-in-room rate calculation unit 7123 determines whether or not the time period being measured by the timer 7103 is equal to or less than the set time period T1. When the time period is equal to or less than the set time period T1, the process proceeds to step S713. When the time period is not equal to or not less than the set time period T1, the process proceeds to step S715.

In step S713, the control presence-in-room rate calculation unit 7123 determines whether or not the time period being measured by the timer 7104 is equal to or less than the set time period T2. When the time period is equal to or less than the set time period T2, the process proceeds to step S714. When the time period is not equal to or not less than the set time period T2, the process proceeds to step S719.

In step S714, the control presence-in-room rate calculation unit 7123 sets, as the control presence-in-room rate 7180, a maximum conditional presence-in-room rate out of the conditional presence-in-room rate 7160 and the conditional presence-in-room rate 7161 of the living room 1040, and the process is ended. As a result, in a case where the set time period T1 has not elapsed from the time at which the presence-in-room status of the living room 1040 has changed from an absent state to an in-room state, and the set time period T2 has not elapsed from the time at which the presence-in-room status of the kitchen 1041 has changed from an absent state to an in-room state, the air conditioner 1082 is controlled such that the air-conditioning heat quantity decreases as the maximum conditional presence-in-room rate out of the conditional presence-in-room rate 7160 and the conditional presence-in-room rate 7161 of the living room 1040 decreases.

In step S715, the control presence-in-room rate calculation unit 7123 causes the timer 7103 to reset time measurement, and in step S716 following step S715, the control presence-in-room rate calculation unit 7123 determines whether or not the time period being measured by the timer 7104 is equal to or less than the set time period T2. When the time period is equal to or less than the set time period T2, the process proceeds to step S711. When the time period is not equal to or not less than the set time period T2, the process proceeds to step S717.

In step S711 following step S716, the control presence-in-room rate calculation unit 7123 sets, as the control presence-in-room rate 7180, the conditional presence-in-room rate P2 that is the conditional presence-in-room rate 7161 of the living room 1040 when the presence-in-room status of the kitchen 1041 has changed from an in-room state to an absent state.

As a result, in a case where the set time period T1 has elapsed from the time at which the presence-in-room status of the living room 1040 has changed from an in-room state to an absent state, and the set time period T2 has not elapsed from the time at which the presence-in-room status of the kitchen 1041 has changed from an in-room state to an absent state, the air conditioner 1082 is controlled such that the air-conditioning heat quantity decreases as the conditional presence-in-room rate 7161 of the living room 1040 decreases.

In step S717, the control presence-in-room rate calculation unit 7123 causes the timer 7104 to reset time measurement.

In step S718 following step S717, the control presence-in-room rate calculation unit 7123 sets the standard pattern 7162 of the presence-in-room rate of the living room 1040 as the control presence-in-room rate 7180, and the process is ended. As a result, in a case where the set time period T1 has elapsed from the time at which the presence-in-room status of the living room 1040 has changed from an in-room state to an absent state, and the set time period T2 has elapsed from the time at which the presence-in-room status of the kitchen 1041 has changed from an in-room state to an absent state, the air conditioner 1082 is controlled such that the air-conditioning heat quantity decreases as the standard pattern 7162 of a presence-in-room rate of the living room 1040 decreases.

In step S719, the control presence-in-room rate calculation unit 7123 causes the timer 7104 to reset time measurement.

In step S706 following step S719, the control presence-in-room rate calculation unit 7123 sets, as the control presence-in-room rate 7180, the conditional presence-in-room rate PI that is the conditional presence-in-room rate 7160 of the living room 1040 when the presence-in-room status of the living room 1040 has changed from an absent state to an in-room state, and the process is ended.

As a result, in a case where the set time period T1 has not elapsed from the time at which the presence-in-room status of the living room 1040 has changed from an in-room state to an absent state, and the set time period T2 has elapsed from the time at which the presence-in-room status of the kitchen 1041 has changed from an in-room state to an absent state, the air conditioner 1082 is controlled such that the air-conditioning heat quantity decreases as the conditional presence-in-room rate 7160 of the living room 1040 decreases.

In and after step S720, processing is executed, which is for a case of not immediately after the presence-in-room status of the living room 1040 has changed from an in-room state to an absent state and also not immediately after the presence-in-room status of the kitchen 1041 has changed from an in-room state to an absent state.

In step S720, the control presence-in-room rate calculation unit 7123 determines whether or not the timer 7104 is measuring a time period. When the timer 7104 is measuring a time period, the process proceeds to step S721. When the timer 7104 is not measuring a time period, the process proceeds to step S722.

In step S721, the control presence-in-room rate calculation unit 7123 determines whether or not the timer 7103 is measuring a time period. When the timer 7103 is measuring a time period, the process proceeds to step S712. When the timer 7103 is not measuring a time period, the process proceeds to step S716.

By advancing the process from step S721 to step S712, in a case where each of the timers 7103 and 7104 is measuring a time period, when the set time period T1 has not elapsed from the time at which the presence-in-room status of the living room 1040 has changed from an in-room state to an absent state, and the set time period T2 has not elapsed from the time at which the presence-in-room status of the kitchen 1041 has changed from an in-room state to an absent state, the control presence-in-room rate 7180 adopts a maximum conditional presence-in-room rate out of the conditional presence-in-room rate 7160 and the conditional presence-in-room rate 7161 of the living room 1040, and the air conditioner 1082 is controlled such that the air-conditioning heat quantity decreases as the maximum conditional presence-in-room rate out of the conditional presence-in-room rate 7160 and the conditional presence-in-room rate 7161 of the living room 1040 decreases.

In addition, when the set time period T1 has elapsed from the time at which the presence-in-room status of the living room 1040 has changed from an in-room state to an absent state, and the set time period T2 has not elapsed from the time at which the presence-in-room status of the kitchen 1041 has changed from an in-room state to an absent state, the control presence-in-room rate 7180 adopts the conditional presence-in-room rate P2 that is the conditional presence-in-room rate 7161 of the living room 1040 when the presence-in-room status of the kitchen 1041 has changed from an absent state to an in-room state, and the air conditioner 1082 is controlled such that the air-conditioning heat quantity decreases as the conditional presence-in-room rate 7161 of the living room 1040 decreases.

In addition, when the set time period T1 has not elapsed from the time at which the presence-in-room status of the living room 1040 has changed from an in-room state to an absent state, and the set time period T2 has elapsed from the time at which the presence-in-room status of the kitchen 1041 has changed from an in-room state to an absent state, the control presence-in-room rate 7180 adopts the conditional presence-in-room rate PI that is the conditional presence-in-room rate 7160 of the living room 1040 when the presence-in-room status of the living room 1040 has changed from an absent state to an in-room state, and the air conditioner 1082 is controlled such that the air-conditioning heat quantity decreases as the conditional presence-in-room rate 7160 of the living room 1040 decreases.

In addition, when the set time period T1 has elapsed from the time at which the presence-in-room status of the living room 1040 has changed from an in-room state to an absent state, and the set time period T2 has elapsed from the time at which the presence-in-room status of the kitchen 1041 has changed from an in-room state to an absent state, the control presence-in-room rate 7180 adopts the standard pattern 7162 of the presence-in-room rate of the living room 1040, and the air conditioner 1082 is controlled such that the air-conditioning heat quantity decreases as the standard pattern 7162 of the presence-in-room rate of the living room 1040 decreases.

In step S722, the control presence-in-room rate calculation unit 7123 determines whether or not the timer 7103 is measuring a time period. When the timer 7103 is not measuring a time period, the process proceeds to step S718. When the timer 7103 is measuring a time period, the process proceeds to step S723.

In step S718 following step S722, the control presence-in-room rate calculation unit 7123 sets the standard pattern 7162 of the presence-in-room rate of the living room 1040 as the control presence-in-room rate 7180, and the process is ended. As a result, in a case where each of the timers 7103 and 7104 is not measuring a time period, the air conditioner 1082 is controlled such that the air-conditioning heat quantity decreases as the standard pattern 7162 of the presence-in-room rate of the living room 1040 decreases.

In step S723, the control presence-in-room rate calculation unit 7123 determines whether or not the time period being measured by the timer 7103 is equal to or less than the set time period T1. When the time period is equal to or less than the set time period T1, the process proceeds to step S706. When the time period is not equal to or not less than the set time period T1, the process proceeds to step S724.

In step S706 following step S723, the control presence-in-room rate calculation unit 7123 sets, as the control presence-in-room rate 7180, the conditional presence-in-room rate PI that is the conditional presence-in-room rate 7160 of the living room 1040 when the presence-in-room status of the living room 1040 has changed from an absent state to an in-room state, and the process is ended.

As a result, in a case where the timer 7104 is not measuring a time period and the set time period T1 has not elapsed from the time at which the presence-in-room status of the living room 1040 has changed from an absent state to an in-room state, the air conditioner 1082 is controlled such that the air-conditioning heat quantity decreases as the conditional presence-in-room rate 7160 of the living room 1040 decreases.

In step S724, the control presence-in-room rate calculation unit 7123 causes the timer 7103 to reset time measurement.

In step S718 following step S724, the control presence-in-room rate calculation unit 7123 sets the standard pattern 7162 of the presence-in-room rate of the living room 1040 as the control presence-in-room rate 7180, and the process is ended. As a result, in a case where the timer 7104 is not measuring a time period and the set time period T1 has elapsed from the time at which the presence-in-room status of the living room 1040 has changed from an in-room state to an absent state, the air conditioner 1082 is controlled such that the air-conditioning heat quantity decreases as the standard pattern 7162 of the presence-in-room rate of the living room 1040 decreases.

According to the operation of the controller 7083 shown in Fig. 23, when the presence-in-room status of the living room 1040 has changed from an in-room state to an absent state, an occurrence state of exceeding of the threshold of a time period during which the presence-in-room status of the living room 1040 is in an absent state is set as the prior information of the conditional presence-in-room rate 7160 of the living room 1040, and when a state where the presence-in-room status of the living room 1040 is in an absent state is continuing, an occurrence state of the change from an in-room state to an absent state in the presence-in-room status of the kitchen 1041 is set as the prior information of the conditional presence-in-room rate 7161 of the living room 1040.

According to the seventh embodiment, the conditional presence-in-room rate of the living room 1040 can be determined by using together the change in the presence-in-room status of the kitchen 1041 with a duration of the presence-in-room status of the living room 10 40.

8 Eighth Embodiment

A eighth embodiment relates to a conditional presence-in-room rate calculation unit 1121 and a standard pattern calculation unit 1122 for respectively replacing the conditional presence-in-room rate calculation unit 1121 and the standard pattern calculation unit 1122 in the first embodiment.

A main difference between the first embodiment and the eighth embodiment is that, in the first embodiment, the conditional presence-in-room rate calculation unit 1121 calculates the conditional presence-in-room rate 1161 of the living room 1040 without considering a time of a day, difference between a weekday and a holiday, and a day of a week, while the standard pattern calculation unit 1122 calculates the standard pattern 1162 of the presence-in-room rate of the living room 1040 without considering a time of a day, difference between a weekday and a holiday, and a day of a week, but in the eighth embodiment, the conditional presence-in-room rate calculation unit 1121 calculates a conditional presence-in-room rate 1161 of a living room 1040 such that the conditional presence-in-room rate 1161 of the living room 1040 varies depending on a time of a day, difference between a weekday and a holiday, or a day of a week, while the standard pattern calculation unit 1122 calculates a standard pattern 1162 of a presence-in-room rate of the living room 1040 such that the standard pattern 1162 of the presence-in-room rate of the living room 1040 varies depending on a time of a day, difference between a weekday and a holiday, or a day of a week. As a result, control is performed on an air conditioner 1082 taking a time of a day, difference between a weekday and a holiday, or a day of a week into account.

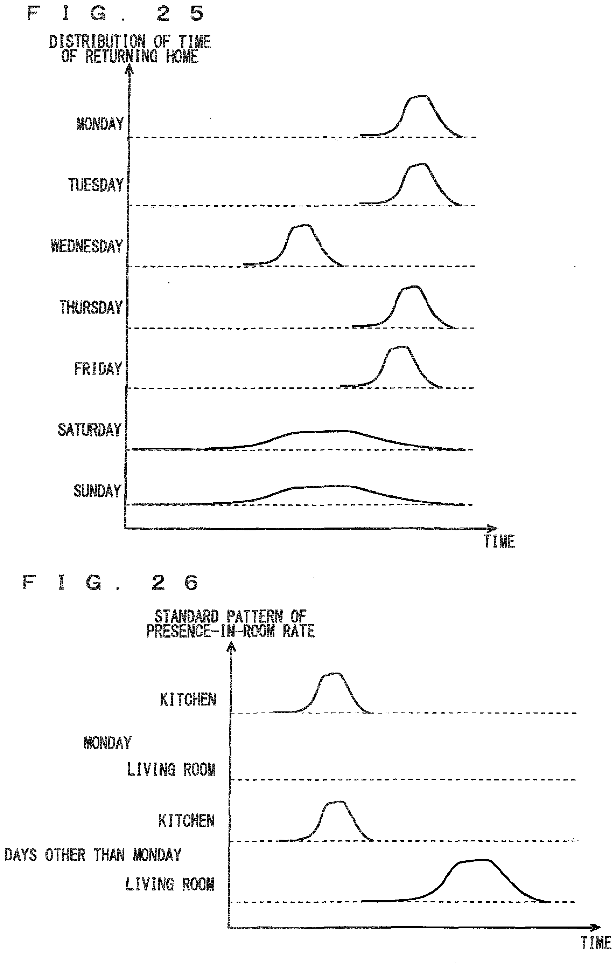

Fig. 25 is a graph showing a distribution of a time of returning home on each day of a week. The graph of Fig. 25 shows distribution of a time of returning home on each day of the week in a case where Monday to Friday are working days, Saturday and Sunday are holidays, Wednesday is a day for leaving an office at a regular time, and it is possible to go home earlier on Wednesday than other working days.

From the distribution of the time of returning home on each day of the week shown in Fig. 25, when Monday to Sunday are classified such that the days of the week with similar distributions of the times of returning home belong to a same group, it is possible to grasp that Monday, Tuesday, Thursday, and Friday belong to a first group, Wednesday belongs to a second group, and Saturday and Sunday belong to a third group.

For this reason, by calculating, for each group that is each of the first group, the second group, and the third group, a standard pattern of a presence-in-room rate of the living room reflecting the distribution of a time of returning home on the days of the week belonging to each group, it is possible to obtain a standard pattern of the presence-in-room rate of the living room that more accurately reflects the presence-in-room status of the living room.

Fig. 26 is a graph showing a standard pattern of presence-in-room rates of a kitchen and a living room on each of Monday and the days other than Monday. From the standard pattern of the presence-in-room rates of the kitchen and the living room on Monday shown in Fig. 26, it is possible to grasp that, on Monday, the presence-in-room status of the living room does not become an in-room state after the presence-in-room status of the kitchen has changed from an in-room state to an absent state, but on the days of the week other than Monday, the presence-in-room status of the living room becomes an in-room state after the presence-in-room status of the kitchen has changed from an in-room state to an absent state.

For this reason, by calculating, for Monday, a conditional presence-in-room rate of the living room reflecting a time history of a presence-in-room statuses of the kitchen and the living room on Monday, and calculating, for the days of the week other than Monday, a conditional presence-in-room rate of the living room reflecting a time history of a presence-in-room statuses of the kitchen and the living room on the days of the week other than Monday, it is possible to obtain a conditional presence-in-room rate of the living room that more accurately reflects the presence-in-room status of the living room.

According to the eighth embodiment, in a situation where it is desired to set a set room temperature of the living room as a target room temperature of the living room, setting a room temperature far from the set room temperature of the living room as the target room temperature of the living room is suppressed, and in a situation where it is permitted to set a room temperature far from a set room temperature of the living room as the target room temperature of the living room, setting a room temperature close to the set room temperature of the living room as the target room temperature of the living room is suppressed. Therefore, comfort of air-conditioning is improved, and energy required for air-conditioning is reduced.

Each of the conditional presence-in-room rate calculation unit 2120 of the second embodiment, the conditional presence-in-room rate calculation unit 7120 of the seventh embodiment, and the conditional presence-in-room rate calculation unit 7121 of the seventh embodiment may be replaced with a conditional presence-in-room rate calculation unit that performs calculation of the conditional presence-in-room rate of the living room such that the conditional presence-in-room rate of the living room varies depending on a time of a day, difference between a weekday and a holiday, or a day of a week.

Each of the standard pattern calculation unit 2122 of the second embodiment and the standard pattern calculation unit 7122 of the seventh embodiment may be replaced with a standard pattern calculation unit that performs calculation of a standard pattern of the presence-in-room rate of the living room such that the standard pattern of the presence-in-room rate of the living room varies depending on a time of a day, difference between a weekday and a holiday, or a day of a week.

9 Ninth Embodiment

A ninth embodiment relates to a presence-in-room sensor 1081 and a conditional presence-in-room rate calculation unit 1121 for respectively replacing the presence-in-room sensor 1081 and the conditional presence-in-room rate calculation unit 1121 in the first embodiment.

A main difference between the first embodiment and the ninth embodiment is that, in the first embodiment, a presence-in-room status detected by the presence-in-room sensor 1081 indicates exclusively whether or not a person is present in the kitchen 1041, but in the ninth embodiment, a presence-in-room status detected by the presence-in-room sensor 1081 includes the number of people present in a kitchen 1041.

Further, a main difference between the first embodiment and the ninth embodiment is also that, in the first embodiment, the conditional presence-in-room rate calculation unit 1121 calculates the conditional presence-in-room rate 1161 of the living room 1040 indicating a conditional probability, which is a probability that a person is present in the living room 1040 in response to a change from an in-room state to an absent state in the presence-in-room status of the kitchen 1041, but in the ninth embodiment, the conditional presence-in-room rate calculation unit 1121 calculates a conditional presence-in-room rate 1161 of the living room 1040 indicating a conditional probability, which is a probability that a person is present in the living room 1040 when reduction has occurred in the number of people present in the kitchen 1041.

The number of people present in the kitchen 1041 is specified by detecting entering of a person into the kitchen 1041 and leaving of a person from the kitchen 1041. Entering of a person into the kitchen 1041 and leaving of a person from the kitchen 1041 are detected, for example, by photographing entering of a person into the kitchen 1041 and leaving of a person from the kitchen 1041 with a camera, recording an image obtained by the photographing, and analyzing the recorded image. The specified number of people present in the kitchen 1041 forms a time series. A decrease in the number of people present in the kitchen 1041 indicates leaving of a person from the kitchen 1041.

According to the first embodiment, when a person leaves the kitchen 1041 but a person other than that person is still present in the kitchen 1041, a state where the presence-in-room status of the kitchen 1041 is in an in-room state is continued and it is impossible to detect that the person has left the kitchen 1041. On the other hand, according to the ninth embodiment, even when a person leaves the kitchen 1041 but a person other than that person is still present in the kitchen 1041, it is possible to detect that the person has left the kitchen 1041, and leaving can be used as prior information, which cannot be used as the prior information in the first embodiment.

10 Tenth Embodiment

A tenth embodiment relates to a presence-in-room sensor 1080, a presence-in-room sensor 1081, a conditional presence-in-room rate calculation unit 1121, and a standard pattern calculation unit 1122, for respectively replacing the presence-in-room sensor 1080, the presence-in-room sensor 1081, the conditional presence-in-room rate calculation unit 1121, and the standard pattern calculation unit 1122 in the first embodiment.

A main difference between the first embodiment and the tenth embodiment is that, in the first embodiment, a presence-in-room status detected by the presence-in-room sensor 1080 does not include information for identifying a person present in the living room 1040, and a presence-in-room status detected by the presence-in-room sensor 1081 does not include information for identifying a person present in the kitchen 1041, but in the tenth embodiment, a presence-in-room status detected by the presence-in-room sensor 1080 includes information for identifying a person present in a living room 1040, and a presence-in-room status detected by the presence-in-room sensor 1081 includes information for identifying a person present in a kitchen 1041.

Further, a main difference between the first embodiment and the tenth embodiment is also that, in the first embodiment, the conditional presence-in-room rate calculation unit 1121 calculates the conditional presence-in-room rate 1161 of the living room 1040 without considering a person, but in the tenth embodiment, the conditional presence-in-room rate calculation unit 1121 calculates a conditional presence-in-room rate 1161 of the living room 1040 for each of a plurality of people.

Further, a main difference between the first embodiment and the tenth embodiment is also that, in the first embodiment, the standard pattern calculation unit 1122 calculates the standard pattern 1162 of the presence-in-room rate of the living room 1040 without considering a person, but in the tenth embodiment, the standard pattern calculation unit 1122 calculates a standard pattern 1162 of a presence-in-room rate of the living room 1040 for each of a plurality of people.

The identification of a person entering a room or a person leaving a room is performed, for example, by photographing a face of the person entering the room or the person leaving the room with a camera, recording a face image obtained by photographing, and analyzing the recorded face image.

According to the tenth embodiment, a movement of each of a plurality of people from one room of a house 1020 to another room of the house 1020 is detected, the conditional presence-in-room rate 1161 of the living room 1040 is calculated for each of the plurality of people, and control suitable for behavior of each of the plurality of people is performed on an air conditioner 1082.

In the tenth embodiment, the conditional presence-in-room rate calculation unit 1121 calculates a plurality of conditional presence-in-room rates of living room 1040, and the standard pattern calculation unit 1122 calculates a plurality of standard pattern of presence-in-room rates of the living room 1040. The conditional presence-in-room rate 1161 of the living room 1040, which is used by the target room temperature determination unit 7124 to control the air conditioner 1082, is a maximum conditional presence-in-room rate out of the plurality of conditional presence-in-room rates of living room 1040, while the standard pattern of the presence-in-room rate of the living room 1040, which is used by the target room temperature determination unit 7124 to control the air conditioner 1082, is a maximum standard pattern out of the plurality of standard patterns of presence-in-room rates of the living room 1040. As a result, control suitable for a presence-in-room status having the highest possibility of occurrence is performed on an air conditioner 1082.

According to the tenth embodiment, the conditional presence-in-room rate 1161 of the living room 1040 and the standard pattern 1162 of the presence-in-room rate of the living room 1040 are calculated for each of a plurality of people, the target room temperature 1220 of the living room 1040 is set reflecting behavior of each of the plurality of people, and comfort of air-conditioning is improved while energy required for air-conditioning is reduced. Similar modification may be made in the second or seventh embodiment.

It should be noted that the present invention can freely combine each embodiment within the scope of the invention, and can deform or omit each embodiment as appropriate.

While the present invention has been described in detail, the foregoing description is illustrative in all aspects and the present invention is not limited thereto. It is understood that innumerable modifications not illustrated may be envisaged without departing from the scope of the present invention.

Explanation of Reference Signs

| | |
|---|---|
| 1000 | house with air conditioner |
| 2000 | house with air conditioner |
| 1020 | house |
| 2020 | house |
| 1021 | air-conditioning system |
| 2021 | air-conditioning system |
| 1040 | living room |
| 2040 | living room |
| 1041 | kitchen |
| 1080 | presence-in-room sensor |
| 1081 | presence-in-room sensor |
| 2080 | presence-in-room sensor |
| 1082 | air conditioner |
| 2082 | air conditioner |
| 1083 | controller |
| 2083 | controller |
| 7083 | controller |

**Claims**

1. An air-conditioning control apparatus (1083, 2083, 7083) comprising:

- an acquisition unit (1100, 2100, 7100) that acquires a presence-in-room status of at least one room (1040, 1041, 2040) including a room to be air-conditioned (1040, 2040);
- a storage unit (1102, 2102, 7102) that stores a time history (1140, 1141, 2140, 7140, 7141) of a presence-in-room status of the at least one room (1040, 1041, 2040);
- a conditional presence-in-room rate calculation unit (1121, 2120, 7120, 7121) that performs calculation of a conditional presence-in-room rate (1161, 2160, 7160, 7161) indicating a probability that a person is present in the room to be air-conditioned (1040, 2040) in response to a change in a presence-in-room status of the at least one room (1040, 1041, 2040), from a time history (1140, 1141, 2140, 7140, 7141) of a presence-in-room status of the at least one room (1040, 1041, 2040); and

- a control unit (1124, 2124, 7124) that performs a control on an air conditioner (1082, 2082) that performs air-conditioning of the room to be air-conditioned (1040, 2040), to reduce an air-conditioning heat quantity as the conditional presence-in-room rate (1161, 2160, 7160, 7161) decreases in a case where a presence-in-room status of the room to be air-conditioned (1040, 2040), the presence-in-room status being included in a presence-in-room status of the at least one room (1040, 1041, 2040), is in an absent state.

2. The air-conditioning control apparatus (1083, 2083, 7083) according to claim 1, wherein the conditional presence-in-room rate (1161, 2160, 7160, 7161) indicates a probability that a person is present in the room to be air-conditioned (1040, 2040) by a time after a set time period from a time at which a change occurs in a presence-in-room status of the at least one room (1040, 1041, 2040).

3. The air-conditioning control apparatus (1083, 7083) according to claim 1 or 2, wherein the room to be air-conditioned (1040) is a first room (1040); wherein the at least one room (1040, 1041) further includes a second room (1041) different from the first room (1040); wherein a presence-in-room status of the at least one room (1040, 1041) includes a presence-in-room status of the second room (1041); and wherein a change in a presence-in-room status of the at least one room (1040, 1041) is a change in a presence-in-room status of the second room (1041).

4. The air-conditioning control apparatus (1083, 7083) according to claim 3, wherein a change in a presence-in-room status of the second room (1041) is a change from an in-room state to an absent state.

5. The air-conditioning control apparatus (1083, 7083) according to claim 3, wherein a presence-in-room status of the second room (1041) includes the number of people present in the second room (1041); and a change in a presence-in-room status of the second room (1041) is a decrease in the number of people in the second room (1041).

6. The air-conditioning control apparatus (1083, 7083) according to any one of claims 3 to 5, wherein the control is a first control; wherein a time history (1140, 1141, 7140, 7141) of a presence-in-room status of the at least one room (1040, 1041) includes a time history (1140, 7140) of a presence-in-room status of the first room (1040); wherein the air-conditioning control apparatus (1083, 7083) further comprises a standard pattern calculation unit (1122, 7122) that performs calculation of a standard pattern (1162, 7162) indicating a standard probability that a person is present in the first room (1040), from a time history (1140, 7140) of a presence-in-room status of the first room (1040); and wherein the control unit (1124, 7124)

- performs the first control on the air conditioner (1082) between a first time at which a change occurs in a presence-in-room status of the second room (1041) and a second time after a set time period from the first time , and
- performs a second control on the air conditioner (1082) to reduce the air-conditioning heat quantity as the standard pattern (1162, 7162) decreases after the second time .

7. The air-conditioning control apparatus (1083, 7083) according to claim 6, wherein a time history (1140, 1141, 7140, 7141) of a presence-in-room status of the at least one room (1040, 1041) further includes a time history (1141, 7141) of a presence-in-room status of the second room (1041); and wherein the conditional presence-in-room rate calculation unit (1121, 7121)

- obtains 1st to M-th time periods arranged in ascending order, M being an integer of 2 or more, from a time history (1140, 7140) of a presence-in-room status of the first room (1040) and from a time history (1141, 7141) of a presence-in-room status of the second room (1041), wherein each of the 1st to M-th time periods is a time period from a time at which a presence-in-room status of the second room (1041) changes from an in-room state to an absent state to a time at which a presence-in-room status of the first room (1040) changes from an absent state to an in-room state,
- obtains an i-th time difference that is a time difference obtained by subtracting an i-th time period from an (i + 1)th time period where i is each of 1 to M-1,
- obtains a j-th time difference that is a maximum time difference out of 1st to (M - 1)th time differences, and

sets a j-th time period as the set time period.

8. The air-conditioning control apparatus (1083, 7083) according to any one of claims 3 to 7, wherein a time history (1140, 1141, 7140, 7141) of a presence-in-room status of the at least one room (1040, 1041) includes a time history (1140, 7140) of a presence-in-room status of the first room (1040) and a time history (1141, 7141) of a presence-in-room status of the second room (1041); and wherein the conditional presence-in-room rate calculation unit (1121, 7121)

- obtains the first number of counts indicating the number of changes in a presence-in-room status of the second room (1041), from a time history (1141, 7141) of a presence-in-room status of the second room (1041),
- obtains the second number of counts indicating the number of changes in a presence-in-room status of the first room (1040) to an in-room state between a time at which a change occurs in a presence-in-room status of the second room (1041) and a time after a time period t from the time at which a change occurs in a presence-in-room status of the second room (1041), from a time history (1140, 7140) of a presence-in-room status of the first room (1040) and from a time history (1141, 7141) of a presence-in-room status of the second room (1041), and
- performs the calculation to lower a value taken by the conditional presence-in-room rate (1161, 7161) at a time after a time period t from a time at which a change occurs in a presence-in-room status of the second room (1041), as a ratio of the second number of counts to the first number of counts increases.

9. The air-conditioning control apparatus (1083, 7083) according to claim 8, wherein a time at which a change occurs in a presence-in-room status of the second room (1041) is a first time; and wherein the conditional presence-in-room rate calculation unit (1121, 7121)

- obtains the third number of counts indicating the number of changes in a presence-in-room status of the first room (1040) to an in-room state between the first time and a second time after a set time period from the first time, from a time history (1140, 7140) of a presence-in-room status of the first room (1040) and from a time history (1141, 7141) of a presence-in-room status of the second room (1041), and
- performs the calculation to cause the conditional presence-in-room rate (1161, 7161) to be a ratio of a count difference obtained by subtracting the second number of counts from the third number of counts at a time after a time period t from the first time, to the first number of counts.

10. The air-conditioning control apparatus (1083, 7083) according to any one of claims 3 to 7, wherein a time history (1140, 1141, 7140, 7141) of a presence-in-room status of the at least one room (1040, 1041) includes a time history (1140, 7140) of a presence-in-room status of the first room (1040) and a time history (1141, 7141) of a presence-in-room status of the second room (1041); and wherein the conditional presence-in-room rate calculation unit (1121, 7121)

- obtains the first number of counts indicating the number of changes in a presence-in-room status of the second room (1041), from a time history (1141, 7141) of a presence-in-room status of the second room (1041),
- obtains the second number of counts indicating the number of changes in a presence-in-room status of the first room (1040) to an in-room state between a first time at which a change occurs in a presence-in-room status of the second room (1041) and a second time after a set time period from the first time, from a time history (1140, 7140) of a presence-in-room status of the first room (1040) and from a time history (1141, 7141) of a presence-in-room status of the second room (1041), and
- performs the calculation to cause the conditional presence-in-room rate (1161, 7161) to be a ratio of the second number of counts to the first number of counts between the first time and the second time.

11. The air-conditioning control apparatus (2083, 7083) according to claim 1 or 2, wherein a change in a presence-in-room status of the at least one room (1040, 1041, 2040) is a change in a presence-in-room status of the room to be air-conditioned (1040, 2040).

12. The air-conditioning control apparatus (2083, 7083) according to claim 11, wherein a change in a presence-in-room status of the room to be air-conditioned (1040, 2040) is a change from an in-room state to an absent state.

13. The air-conditioning control apparatus (2083, 7083) according to claim 11 or 12,

wherein the control is a first control;

wherein a time history (2140, 7140, 7141) of a presence-in-room status of the at least one room (1040, 1041, 2040) includes a time history (2140, 7140) of a presence-in-room status of the room to be air-conditioned (1040, 2040);

wherein the air-conditioning control apparatus (2083, 7083) further comprises a standard pattern calculation unit (2122, 7122) that performs calculation of a standard pattern (2162, 7162) indicating a standard probability that a person is present in the room to be air-conditioned (1040, 2040), from a time history (2140, 7140) of a presence-in-room status of the room to be air-conditioned (1040, 2040); and

wherein the control unit (2124, 7124)

(1) performs the first control on the air conditioner (1082, 2082) between a first time at which a change occurs in presence-in-room status of the room to be air-conditioned (1040, 2040) and a second time after a set time period from the first time, and

(2) performs a second control on the air conditioner (1082, 2082) to reduce the air-conditioning heat quantity as the standard pattern (2162, 7162) decreases after the second time.

14. The air-conditioning control apparatus (2083, 7083) according to claim 13, wherein the conditional presence-in-room rate calculation unit (2120, 7120):

- obtains 1st to M-th time periods arranged in ascending order, M being 2 or more, from a time history (2140, 7140) of a presence-in-room status of the room to be air-conditioned (1040, 2040), wherein each of the 1st to M-th time periods is a time period from a time at which a presence-in-room status of the room to be air-conditioned (1040, 2040) changes from an in-room state to an absent state to a time at which a presence-in-room status of the room to be air-conditioned (1040, 2040) changes from an absent state to an in-room state;

- obtains an i-th time difference that is a time difference obtained by subtracting an i-th time period from an (i + 1)th time period where i is each of 1 to n-1;

- obtains a j-th time difference that is a maximum time difference out of 1st to (M - 1)th time differences; and

- sets a j-th time period as the set time period.

15. The air-conditioning control apparatus (2083, 7083) according to any one of claims 11 to 14, wherein a time history (2140, 7140, 7141) of a presence-in-room status of the at least one room (1040, 1041, 2040) includes a time history (2140, 7140) of a presence-in-room status of the room to be air-conditioned (1040, 2040); and wherein the conditional presence-in-room rate calculation unit (2120, 7120)

- obtains the first number of counts indicating the number of changes in a presence-in-room status of the room to be air-conditioned (1040, 2040), from a time history (2140, 7140) of a presence-in-room status of the room to be air-conditioned (1040, 2040),

- obtains the second number of counts indicating the number of changes in a presence-in-room status of the room to be air-conditioned (1040, 2040) to an in-room state between a time at which a change occurs in a presence-in-room status of the room to be air-conditioned (1040, 2040) and a time after a time period t from the time at which a change occurs in a presence-in-room status of the room to be air-conditioned (1040, 2040), from a time history of a presence-in-room status of the room to be air-conditioned (1040, 2040), and

- performs the calculation to lower a value taken by the conditional presence-in-room rate (2160, 7160) at a time after a time period t from a time at which a change occurs in a presence-in-room status of the room to be air-conditioned (1040, 2040), as a ratio of the second number of counts to the first number of counts increases.

16. The air-conditioning control apparatus (2083, 7083) according to claim 15, wherein a time at which a change occurs in a presence-in-room status of the room to be air-conditioned (1040, 2040) is a first time; and wherein the conditional presence-in-room rate calculation unit (2120, 7120) (1) obtains the third number of counts indicating the number of changes in a presence-in-room status of the room to be air-conditioned (1040, 2040) to an in-room state between the first time and a second time after a set time period from the first time, from a time history (2140, 7140) of a presence-in-room status of the room to be air-conditioned (1040, 2040), and

(2) performs the calculation to cause the conditional presence-in-room rate (2160, 7160) to be a ratio of a count difference to the first number of counts, the count difference obtained by subtracting the second number of counts from the third number of counts.

17. The air-conditioning control apparatus (2083, 7083) according to any one of claims 11 to 14, wherein a time history (2140, 7140, 7141) of a presence-in-room status of the at least one room (1040, 1041, 2040) includes a time history (2140, 7140) of a presence-in-room status of the room to be air-conditioned (1040, 2040); and wherein the conditional presence-in-room rate calculation unit (2120, 7120)

- obtains the first number of counts indicating the number of changes in a presence-in-room status of the room to be air-conditioned (1040, 2040), from a time history (2140, 7140) of a presence-in-room status of the room to be air-conditioned (1040, 2040),
- obtains the second number of counts indicating the number of changes in a presence-in-room status of the room to be air-conditioned (1040, 2040) to an in-room state between a first time at which a change occurs in a presence-in-room status of the room to be air-conditioned (1040, 2040) and a second time after a set time period from the first time, from a time history (2140, 7140) of a presence-in-room status of the room to be air-conditioned (1040, 2040), and
- performs the calculation to cause the conditional presence-in-room rate (2160, 7160) to be a ratio of the second number of counts to the first number of counts between the first time and the second time.

18. The air-conditioning control apparatus (1083, 2083, 7083) according to any one of claims 1 to 17, wherein the conditional presence-in-room rate calculation unit (1121, 2120, 7120, 7121) performs the calculation to cause the conditional presence-in-room rate (1161, 2160, 7160, 7161) to vary according to a time of a day, difference between a weekday and a holiday, or a day of a week.

19. The air-conditioning control apparatus (1083, 2083, 7083) according to any one of claims 1 to 18, wherein a presence-in-room status of the at least one room (1040, 1041, 2040) includes information for identifying a person present in the at least one room (1040, 1041, 2040); and wherein the conditional presence-in-room rate calculation unit (1121, 2120, 7120, 7121) performs the calculation for each of a plurality of people.

20. The air-conditioning control apparatus (1083, 2083, 7083) according to any one of claims 1 to 19, wherein the conditional presence-in-room rate calculation unit (1121, 2120, 7120, 7121) calculates a plurality of conditional presence-in-room rates; and wherein the control unit (1124, 2124, 7124) uses a maximum conditional presence-in-room rate out of the plurality of conditional presence-in-room rates, as the conditional presence-in-room rate (1161, 2160, 7160, 7161).

21. An air-conditioning control method comprising:

a) a step (S104) of acquiring a presence-in-room status of at least one room (1040, 1041, 2040) including a room to be air-conditioned (1040, 2040);
b) a step (S104) of storing a time history (1140, 1141, 2140, 7140, 7141) of a presence-in-room status of the at least one room (1040, 1041, 2040);
c) a step (S107) of performing calculation of a conditional presence-in-room rate (1161, 2160, 7160, 7161) indicating a probability that a person is present in the room to be air-conditioned (1040, 2040) in response to a change in a presence-in-room status of the at least one room (1040, 1041, 2040), from a time history (1140, 1141, 2140, 7140, 7141) of a presence-in-room status of the at least one room (1040, 1041, 2040); and
d) a step (S113, S114) of performing control, on an air conditioner (1082, 2082) that performs air-conditioning of the room to be air-conditioned (1040, 2040), to reduce an air-conditioning heat quantity as the conditional presence-in-room rate (1161, 2160, 7160, 7161) decreases in a case where a presence-in-room status of the room to be air-conditioned (1040, 2040), the presence-in-room status being included in a presence-in-room status of the at least one room (1040, 1041, 2040), is in an absent state.

22. An air-conditioning system (1021, 2021) comprising:

- a detection mechanism (1080, 1081, 2080) that detects a presence-in-room status of at least one room (1040, 1041, 2040) including a room to be air-conditioned (1040, 2040);
- an air conditioner (1082, 2082) that performs air-conditioning of the room to be air-conditioned (1040, 2040); and
- an air-conditioning control apparatus (1083, 2083, 7083)

wherein
the air-conditioning control apparatus (1083, 2083, 7083) comprises:

- an acquisition unit (1100, 2100, 7100) that acquires a presence-in-room status of the at least one room (1040, 1041, 2040) from the detection mechanism (1080, 1081, 2080);
- a storage unit (1102, 2102, 7102) that stores a time history (1140, 1141, 2140, 7140, 7141) of a presence-in-room status of the at least one room (1040, 1041, 2040);
- a conditional presence-in-room rate calculation unit (1121, 2120, 7120, 7121) that performs calculation of a conditional presence-in-room rate (1161, 2160, 7160, 7161) indicating a probability that a person is present in the room to be air-conditioned (1040, 2040) in response to a change in a presence-in-room status of the at least one room (1040, 1041, 2040), from a time history (1140, 1141, 2140, 7140, 7141) of a presence-in-room status of the at least one room (1040, 1041, 2040); and
- a control unit (1124, 2124, 7124) that controls the air conditioner (1082, 2082) to reduce an air-conditioning heat quantity as the conditional presence-in-room rate (1161, 2160, 7160, 7161) decreases in a case where a presence-in-room status of the room to be air-conditioned (1040, 2040), the presence-in-room status being included in a presence-in-room status of the at least one room (1040, 1041, 2040), is in an absent state.

23. A house with air conditioner (1000, 2000) comprising:

- a house (1020, 2020) having at least one room (1040, 1041, 2040) including a room to be air-conditioned (1040, 2040);
- a detection mechanism (1080, 1081, 2080) that detects a presence-in-room status of the at least one room (1040, 1041, 2040);
- an air conditioner (1082, 2082) that performs air-conditioning of the room to be air-conditioned (1040, 2040); and
- an air-conditioning control apparatus (1083, 2083, 7083)

wherein
the air-conditioning control apparatus (1083, 2083, 7083) comprises:

- an acquisition unit (1100, 2100, 7100) that acquires a presence-in-room status of the at least one room (1040, 1041, 2040) from the detection mechanism (1080, 1081, 2080);
- a storage unit (1102, 2102, 7102) that stores a time history (1140, 1141, 2140, 7140, 7141) of a presence-in-room status of the at least one room (1040, 1041, 2040);
- a conditional presence-in-room rate calculation unit (1121, 2120, 7120, 7121) that performs calculation of a conditional presence-in-room rate (1161, 2160, 7160, 7161) indicating a probability that a person is present in the room to be air-conditioned (1040, 2040) in response to a change in a presence-in-room status of the at least one room (1040, 1041, 2040), from a time history (1140, 1141, 2140, 7140, 7141) of a presence-in-room status of the at least one room (1040, 1041, 2040); and
- a control unit (1124, 2124, 7124) that controls the air conditioner (1082, 2082) to reduce an air-conditioning heat quantity as the conditional presence-in-room rate (1161, 2160, 7160, 7161) decreases in a case where a presence-in-room status of the room to be air-conditioned (1040, 2040), the presence-in-room status being included in a presence-in-room status of the at least one room (1040, 1041, 2040), is in an absent state.

FIG. 1

FIG. 2

1000

1020

1041

1040

1084 1082 1080 1083 1081

1021

F I G . 3

1000   HOUSE WITH AIR CONDITIONER

1083

CONTROLLER

1084

LIVING ROOM

AIR
CONDITIONER — 1082

PRESENCE-IN
-ROOM SENSOR — 1080

1040

KITCHEN

PRESENCE-IN
-ROOM SENSOR — 1081

1041

FIG. 4

# F I G . 5

START

S101
IS THERE INPUT OF SET ROOM TEMPERATURE?  N

Y  S102
STORE SET ROOM TEMPERATURE

S103
HAS UPDATE TIMING OF PRESENCE-IN-ROOM STATUS ARRIVED?  N

Y  S104
STORE PRESENCE-IN -ROOM STATUS

S105
CALCULATE STANDARD PATTERN

S106
STORE STANDARD PATTERN

S107
CALCULATE CONDITIONAL PRESENCE-IN-ROOM RATE

S108
STORE CONDITIONAL PRESENCE-IN-ROOM RATE

S109
IS OPERATION ENDED?  N

Y

END

FIG. 6

START

CALCULATE CONTROL
PRESENCE-IN-ROOM RATE ⟋S111

STORE CONTROL PRESENCE
-IN-ROOM RATE ⟋S112

DETERMINE TARGET
ROOM TEMPERATURE ⟋S113

STORE TARGET ROOM
TEMPERATURE ⟋S114

TRANSMIT TARGET ROOM
TEMPERATURE TO AIR
CONDITIONER ⟋S115

IS OPERATION ENDED? ⟋S116
N

Y

END

# F I G . 7

RANDOM VARIABLE A

A0　　　　　　　　　　A1

RANDOM VARIABLE B

B0　　　　　　　　　　B1

# F I G . 8

PRESENCE-IN
-ROOM STATUS

IN-ROOM ——1140

LIVING ROOM
(DAY 1)　　ABSENT

LIVING ROOM
(DAY 2)

LIVING ROOM
(DAY 3)

6　　7　　8　　　　　19　　TIME

# F I G . 9

STANDARD PATTERN OF
PRESENCE-IN-ROOM RATE

——1162

6　　7　　8　　　　　19　　TIME

FIG. 10

PRESENCE-IN
-ROOM STATUS

LIVING ROOM
(DAY 1)

LIVING ROOM
(DAY 2)

LIVING ROOM
(DAY 3)

IN-ROOM — 1140

ABSENT

6    7    8    19    TIME

FIG. 11

STANDARD PATTERN OF
PRESENCE-IN-ROOM RATE

1162

6    7    8    19    TIME

F I G . 1 2

FIG. 13

START

S121
IS LATEST PRESENCE-IN-ROOM STATUS OF LIVING ROOM IN ABSENT STATE? — N

Y

S123
HAS PRESENCE-IN-ROOM STATUS OF KITCHEN CHANGED FROM IN-ROOM STATE TO ABSENT STATE? — N

Y

S124
RESET TIMER

S127
IS TIMER MEASURING? — N

S125
START TIMER

Y  S128
TIMER≦T2? — N

Y

S129
RESET TIMER

S126
SET CONDITIONAL PRESENCE-IN-ROOM RATE AS CONTROL PRESENCE-IN-ROOM RATE

S130
SET STANDARD PATTERN AS CONTROL PRESENCE-IN-ROOM RATE

S122
SET 1 AS CONTROL PRESENCE-IN-ROOM RATE

END

# FIG. 14

TARGET ROOM
TEMPERATURE

SET ROOM
TEMPERATURE

LOWER LIMIT
VALUE OF
TARGET ROOM
TEMPERATURE

CONTROL
PRESENCE-IN
-ROOM RATE

0          1

# FIG. 15

TARGET ROOM
TEMPERATURE

SET ROOM
TEMPERATURE

LOWER LIMIT
VALUE OF
TARGET ROOM
TEMPERATURE

CONTROL
PRESENCE-IN
-ROOM RATE

0          1

44

F I G . 1 6

PRESENCE-IN-ROOM
STATUS OF KITCHEN ⌐1141

STANDARD PATTERN OF
PRESENCE-IN-ROOM
RATE OF LIVING ROOM ⌐1162

TIME HISTORY OF
PRESENCE-IN-ROOM
STATUS OF LIVING ROOM ⌐1140

TARGET ROOM TEMPERATURE
(REFERENCE EXAMPLE)

SET ROOM
TEMPERATURE
LOWER LIMIT VALUE
OF TARGET ROOM
TEMPERATURE ⌐1221

CONTROL PRESENCE-IN
-ROOM RATE

SET ROOM
TEMPERATURE ⌐1180
LOWER LIMIT VALUE
OF TARGET ROOM
TEMPERATURE

TARGET ROOM TEMPERATURE
(IMPLEMENTATION EXAMPLE) ⌐1220

ta tb

TIME

45

FIG. 17

FIG. 18

FIG. 19

CONTROLLER

CPU 2083

MEMORY 2102

CPU 2101

TIME HISTORY OF PRESENCE-IN-ROOM STATUS

2080 PRESENCE-IN-ROOM SENSOR → 2100 COMMUNI-CATION UNIT → 2140 PRESENCE-IN-ROOM STATUS OF LIVING ROOM

2120 CONDITIONAL PRESENCE-IN-ROOM RATE CALCULATION UNIT

2122 STANDARD PATTERN CALCULATION UNIT

2160 CONDITIONAL PRESENCE-IN-ROOM RATE

2162 STANDARD PATTERN

2103 TIMER

2123 CONTROL PRESENCE-IN-ROOM RATE CALCULATION UNIT

2180 CONTROL PRESENCE-IN-ROOM RATE

2900 USER → 2105 INPUT UNIT → 2200 SET ROOM TEMPERATURE OF LIVING ROOM

2124 TARGET ROOM TEMPERATURE DETERMINATION UNIT

2082 AIR CONDITIONER ← 2100 COMMUNI-CATION UNIT ← 2220 TARGET ROOM TEMPERATURE OF LIVING ROOM

47

F I G . 2 0

```
                    ┌─────────┐
                    │  START  │
                    └────┬────┘
                         │        ┌─S201
                         ▼
         ╱──────────────────────────────╲  N
        ╱ IS LATEST PRESENCE-IN-ROOM STATUS ╲──────────────────────────────────┐
        ╲ OF LIVING ROOM IN ABSENT STATE?  ╱                                    │
         ╲──────────────┬───────────────╱                                       │
                     Y  │      ┌─S203                                           │
                        ▼                                                        │
         ╱──────────────────────────────╲  N                                   │
        ╱ HAS PRESENCE-IN-ROOM STATUS OF  ╲──────────┐                         │
        ╲ LIVING ROOM CHANGED FROM IN-ROOM╱          │                         │
         ╲   STATE TO ABSENT STATE?      ╱           │                         │
          ╲───────────┬──────────────╱               │                         │
                   Y  │      ┌─S204                   ▼      ┌─S207             │
                      ▼                    ╱────────────────╲ N                 │
              ┌──────────────┐            ╱ IS TIMER MEASURING?╲────────────┐   │
              │ RESET TIMER  │            ╲                   ╱             │   │
              └──────┬───────┘             ╲─────────┬──────╱              │   │
                     │       ┌─S205               Y  │   ┌─S208            │   │
                     ▼                               ▼                      │   │
              ┌──────────────┐            ╱──────────────────╲ N           │   │
              │ START TIMER  │            ╲   TIMER≦T1?       ╱───┐        │   │
              └──────┬───────┘             ╲────────┬───────╱    │        │   │
                     │                           Y  │       ┌─S209        │   │
                     │                              │        ▼            │   │
                     │                              │  ┌──────────────┐   │   │
                     │                              │  │ RESET TIMER  │   │   │
                     │       ┌─S206                 │  └──────┬───────┘   │   │
                     ▼                              │   ┌─S210 │           │   ┌─S202
       ┌─────────────────────────┐    ┌──────────────────────┐  ┌──────────────────────┐
       │ SET CONDITIONAL PRESENCE │    │ SET STANDARD PATTERN AS CONTROL │ │ SET 1 AS CONTROL  │
       │ -IN-ROOM RATE AS CONTROL │    │  PRESENCE-IN-ROOM RATE │  │ PRESENCE-IN-ROOM RATE │
       │ PRESENCE-IN-ROOM RATE    │    └───────────┬──────────┘  └───────────┬──────────┘
       └────────────┬─────────────┘                │                         │
                    │                               ▼                         │
                    └──────────────────────────►┌─────────┐◄─────────────────┘
                                                 │   END   │
                                                 └─────────┘
```

FIG. 21

# F I G . 2 2

CONTROLLER

~7083

MEMORY ~7102    C P U ~7101

TIME HISTORY OF PRESENCE -IN-ROOM STATUS

~1080
PRESENCE-IN -ROOM SENSOR

7100
COMMUNI -CATION UNIT

~7140
PRESENCE-IN-ROOM STATUS OF LIVING ROOM

~7120
CONDITIONAL PRESENCE -IN-ROOM RATE CALCULATION UNIT

~1081
PRESENCE-IN -ROOM SENSOR

~7141
PRESENCE-IN-ROOM STATUS OF KITCHEN

~7121
CONDITIONAL PRESENCE -IN-ROOM RATE CALCULATION UNIT

~7122
STANDARD PATTERN CALCULATION UNIT

~7160
CONDITIONAL PRESENCE -IN-ROOM RATE

~7161
CONDITIONAL PRESENCE -IN-ROOM RATE

~7103
TIMER

~7162
STANDARD PATTERN

7123

TIMER

~7104

CONTROL PRESENCE -IN-ROOM RATE CALCULATION UNIT

~7180
CONTROL PRESENCE -IN-ROOM RATE

~7900
USER

~7105
INPUT UNIT

~7200
SET ROOM TEMPERATURE

7124

TARGET ROOM TEMPERATURE DETERMINATION UNIT

~1082
AIR CONDITIONER

~7100
COMMUNI -CATION UNIT

~7220
TARGET ROOM TEMPERATURE

F I G . 2 3

```
                          ┌─────────┐
                          │  START  │
                          └────┬────┘
                               │        S701
              ┌────────────────┴──────────────┐
            ╱ IS LATEST PRESENCE-IN-ROOM        ╲  N
           ⟨    STATUS OF LIVING ROOM            ⟩─────────────────────────────────┐
            ╲      IN ABSENT STATE?             ╱                                   │
              └────────────────┬──────────────┘                                    │
                               │ Y        S703                                     │
              ┌────────────────┴──────────────┐                                    │
            ╱ HAS PRESENCE-IN-ROOM STATUS OF    ╲  N                                │
           ⟨  LIVING ROOM CHANGED FROM IN-ROOM   ⟩───────┐                          │
            ╲   STATE TO ABSENT STATE?          ╱        │                          │
              └────────────────┬──────────────┘          │                          │
                               │ Y                       │      S707                 │
                               │          ┌──────────────┴──────────────┐           │
                               │        ╱ HAS PRESENCE-IN-ROOM STATUS OF  ╲  N        │
                               │       ⟨  KITCHEN CHANGED FROM IN-ROOM     ⟩──────┐   │
                               │        ╲    STATE TO ABSENT STATE?        ╱      │   │
                               │          └──────────────┬──────────────┘        │   │
                         S704  │                         │ Y   S708          S720 │   │
                    ┌──────────┴───┐          ┌──────────┴───┐          ┌─────────┴──┐ │
                    │   RESET      │          │   RESET      │        ╱ IS TIMER 2     ╲ N
                    │   TIMER 1    │          │   TIMER 2    │       ⟨  MEASURING?      ⟩──┐
                    └──────────┬───┘          └──────────┬───┘        ╲              ╱   │
                         S705  │                   S709  │          └────┬───────┘     │
                    ┌──────────┴───┐          ┌──────────┴───┐       Y │ S721      Y │ S722
                    │   START      │          │   START      │    ┌─────┴────┐   ┌────┴─────┐
                    │   TIMER 1    │          │   TIMER 2    │  ╱ IS TIMER 1  ╲ N ╱IS TIMER 1 ╲ N
                    └──────────┬───┘          └──────────┬───┘ ⟨ MEASURING?   ⟩──⟨MEASURING?  ⟩──┐
                               │                    Y    │ S710 ╲           ╱   ╲          ╱   │
                               │          N ┌────────────┴──┐    └───┬───┘      └───┬──┘    │
                               │           ╱ IS TIMER 1      ╲       Y │          Y │       │
                               │          ⟨  MEASURING?       ⟩        │            │       │
                               │           ╲                ╱         │            │       │
                               │             └──────┬──────┘          │            │       │
                               │                    │ Y               │            │       │
    ┌───┐   ┌───┐   ┌───┐   ┌───┐                                   ┌───┐       ┌───┐   ┌───┐   ┌───┐
    │ 1 │   │ 2 │   │ 3 │   │ 4 │                                   │ 5 │       │ 6 │   │ 7 │   │ 8 │
    └───┘   └───┘   └───┘   └───┘                                   └───┘       └───┘   └───┘   └───┘
```

F I G . 2 4

# FIG. 25

DISTRIBUTION OF TIME
OF RETURNING HOME

MONDAY

TUESDAY

WEDNESDAY

THURSDAY

FRIDAY

SATURDAY

SUNDAY

TIME

# FIG. 26

STANDARD PATTERN OF
PRESENCE-IN-ROOM RATE

KITCHEN

MONDAY

LIVING ROOM

KITCHEN

DAYS OTHER THAN MONDAY

LIVING ROOM

TIME

<div align="center">**INTERNATIONAL SEARCH REPORT**</div>

| | |
|---|---|
| | International application No. |
| | PCT/JP2016/070059 |

**A. CLASSIFICATION OF SUBJECT MATTER**
*F24F11/02(2006.01)i*

According to International Patent Classification (IPC) or to both national classification and IPC

**B. FIELDS SEARCHED**

Minimum documentation searched (classification system followed by classification symbols)
F24F11/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-183553 A (Toshiba Corp.),<br>29 September 2014 (29.09.2014),<br>paragraphs [0013] to [0057]; fig. 1 to 12<br>& US 2014/0285348 A1 & GB 2514230 A<br>& GB 201404368 D0 & FR 3003666 A | 1-23 |
| A | WO 2015/170414 A1 (Mitsubishi Electric Corp.),<br>12 November 2015 (12.11.2015),<br>paragraphs [0011] to [0043]; fig. 1 to 4<br>(Family: none) | 1-23 |
| A | JP 2-254247 A (Matsushita Electric Industrial<br>Co., Ltd.),<br>15 October 1990 (15.10.1990),<br>page 2, lower right column, line 10 to page 4,<br>lower left column, line 1; fig. 1 to 3<br>(Family: none) | 1-23 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>25 August 2016 (25.08.16) | Date of mailing of the international search report<br>06 September 2016 (06.09.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5223266 A

- JP 3119082 B